(19) Europäisches Patentamt
European Patent Office
Office européen des brevets

(11) **EP 4 340 269 A1**

(12) **EUROPEAN PATENT APPLICATION**
published in accordance with Art. 153(4) EPC

(43) Date of publication:
**20.03.2024 Bulletin 2024/12**

(21) Application number: **22807737.6**

(22) Date of filing: **09.05.2022**

(51) International Patent Classification (IPC):
*H04L 1/08* (2006.01)    *H04L 5/00* (2006.01)
*H04W 72/04* (2023.01)    *H04W 72/12* (2023.01)
*H04W 72/14* (2009.01)

(52) Cooperative Patent Classification (CPC):
**H04L 1/08; H04L 5/00; H04W 72/04; H04W 72/12;
H04W 72/23;** Y02D 30/70

(86) International application number:
**PCT/KR2022/006557**

(87) International publication number:
**WO 2022/240089 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.05.2021 KR 20210060565**

(71) Applicant: **LG Electronics Inc.**
**Yeongdeungpo-gu**
**Seoul 07336 (KR)**

(72) Inventors:
• **KANG, Jiwon**
  **Seoul 06772 (KR)**
• **BAE, Duckhyun**
  **Seoul 06772 (KR)**

(74) Representative: **Mooser, Sebastian Thomas**
**Wuesthoff & Wuesthoff**
**Patentanwälte PartG mbB**
**Schweigerstraße 2**
**81541 München (DE)**

(54) **METHOD AND DEVICE FOR COMMUNICATING IN WIRELESS COMMUNICATION SYSTEM**

(57) Disclosed are a method and device for communicating in a wireless communication system. A method for a terminal to communicate disclosed herein may comprise the steps of: receiving, from a base station, first information related to a plurality of transmission occasions (TOs), wherein the first information includes the number of TOs; receiving, from the base station, second information instructing whether to communicate in at least one specific TO among the plurality of TOs; and communicating with the base station in at least one TO among the plurality of TOs on the basis of the second information.

FIG.19

RECEIVING, FROM THE BASE STATION, FIRST INFORMATION RELATED TO A PLURALITY OF TOS INCLUDING THE NUMBER OF THE PLURALITY OF TOS — S1810

RECEIVING SECOND INFORMATION, FROM THE BASE STATION, INDICATING WHETHER TO PERFORM COMMUNICATION IN AT LEAST ONE SPECIFIC TO AMONG A PLURALITY OF TOS — S1820

PERFORMING COMMUNICATION WITH THE BASE STATION IN AT LEAST ONE TO AMONG THE PLURALITY OF TOS BASED ON THE SECOND INFORMATION — S1830

EP 4 340 269 A1

**Description**

[Technical Field]

The present disclosure relates to a wireless communication system, and more specifically to a method and device for performing communication in a wireless communication system.

[Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

The technical problem of the present disclosure is to provide a method and device for performing communication in a wireless communication system.

Additionally, an additional technical problem of the present disclosure is to provide a method and device for controlling/managing communication in one or more TOs among a plurality of TOs.

Additionally, an additional technical problem of the present disclosure is to provide a method and device for controlling/managing communication in one or more TOs among a plurality of TOs based on an artificial intelligence (AI) model.

The technical problems to be achieved by the present disclosure are not limited to the above-described technical objects, and other technical objects which are not described herein will be clearly understood by those skilled in the pertinent art from the following description.

[Technical Solution]

In one embodiment of the present disclosure, a method for a user equipment (UE) to perform communication in a wireless communication system may include receiving, from a base station, first information related to a plurality of transmission occasions (TOs) including a number of the plurality of TOs; receiving, from the base station, second information indicating whether to perform communication in at least one specific TO among the plurality of TOs; and performing communication with the base station in the at least one TO among the plurality of TOs based on the second information.

In one embodiment of the present disclosure, a method performed by a base station in a wireless communication system may include transmitting, to a user equipment (UE), first information related to a plurality of transmission occasions (TOs) including a number of the plurality of TOs; transmitting, to the UE, second information indicating whether to perform communication in at least one specific TO among the plurality of TOs; and performing communication with the UE in the at least one TO among the plurality of TOs based on the second information.

In one embodiment of the present disclosure, a method for a user equipment (UE) to perform uplink transmission in a wireless communication system may include receiving information related to a plurality of transmission occasions (TOs) from a base station; performing uplink transmission in at least one TO among the plurality of TOs based on the information; and based on information related to uplink transmission performed up to a specific TO among the plurality of TOs satisfying a specific condition, stopping the uplink transmission after the specific TO among the plurality of TOs.

[Technical Effects]

According to an embodiment of the present disclosure, a method and apparatus for performing communication in a wireless communication system may be provided.

According to an embodiment of the present disclosure, a method and device for controlling/managing communication in one or more TOs among a plurality of TOs may be provided.

According to an embodiment of the present disclosure, a method and device for controlling/managing communication in one or more TOs among a plurality of TOs based on an AI model may be provided.

According to an embodiment of the present disclosure, repetitive transmission may be performed more flexibly and adaptively in accordance with target reliability requirements, and the repetition dynamics may be dynamically controlled/varied according to dynamic interference/traffic situation changes.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.

FIG. 2 illustrates a frame structure in a wireless communication system to which the present disclosure may be applied.

FIG. 3 illustrates a resource grid in a wireless communication system to which the present disclosure may be applied.

FIG. 4 illustrates a physical resource block in a wireless communication system to which the present disclosure may be applied.

FIG. 5 illustrates a slot structure in a wireless communication system to which the present disclosure may be applied.

FIG. 6 illustrates physical channels used in a wireless communication system to which the present disclosure may be applied and a general signal transmission and reception method using them.

FIG. 7 is a diagram illustrating downlink transmission and reception operations in a wireless communication system to which the present disclosure may be applied.

FIG. 8 is a diagram illustrating uplink transmission and reception operations in a wireless communication system to which the present disclosure may be applied.

FIG. 9 illustrates a classification of artificial intelligence.

FIG. 10 illustrates a feed-forward neural network.

FIG. 11 illustrates a Recurrent Neural Network.

FIG. 12 illustrates a convolutional neural network.

FIG. 13 illustrates an auto encoder.

FIG. 14 illustrates a functional framework for AI operation that may be applied to this disclosure.

FIG. 15 illustrates split AL inference that may be applied to the present disclosure.

FIG. 16 illustrates the application of a functional framework in a wireless communication system applicable to the present disclosure.

FIG. 17 illustrates application of the functional framework in a wireless communication system applicable to the present disclosure.

FIG. 18 illustrates application of the functional framework in a wireless communication system applicable to the present disclosure.

FIG. 19 is a diagram for describing a method of performing communication of a terminal according to an embodiment of the present disclosure.

FIG. 20 is a diagram for describing a method by which a base station performs communication according to an embodiment of the present disclosure.

FIG. 21 is a diagram for describing a method by which a terminal performs uplink transmission according to an embodiment of the present disclosure.

FIG. 22 is a diagram for describing the signaling procedure of the network side and the terminal according to an embodiment of the present disclosure.

FIG. 23 illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network (5G network), an AI (Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS (General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS (Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

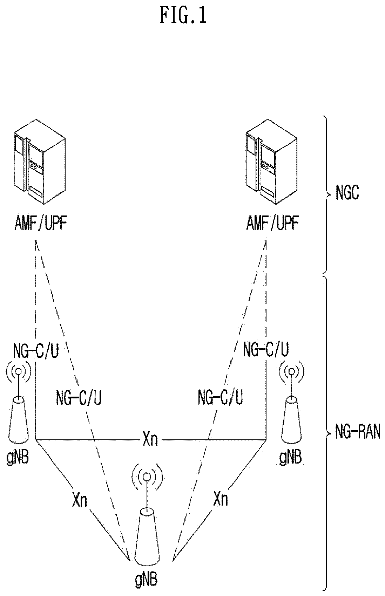

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

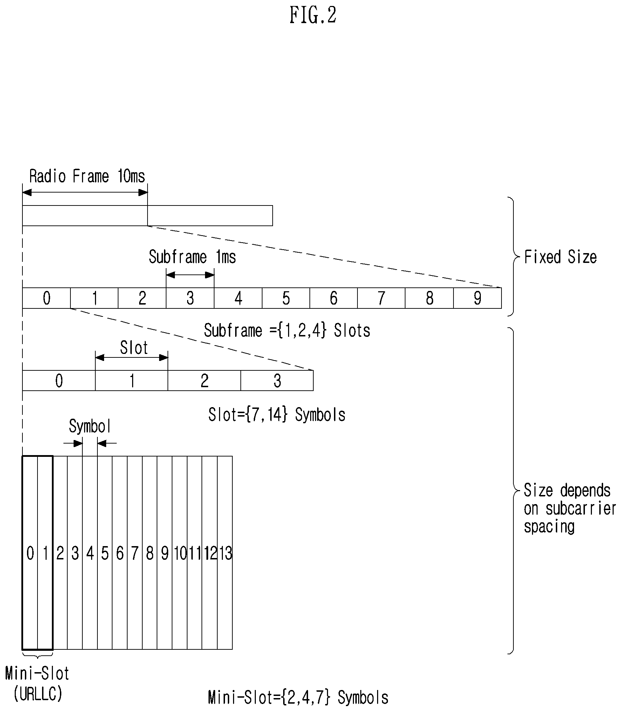

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}\cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2) . FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max} N_d 100)\cdot T_c=10ms$. Here, a radio frame is configured with 10 subframes having a duration of $T_{sf}=(\Delta f_{max} N_d 1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in\{0,...,N_{slot}^{subframe,\mu}-1\}$ in a subframe and are numbered in an increasing order of $n_{s,f}^{\mu}\in 10, ..., N_{slot}^{frame,\mu}-1\}$ in a radio frame. One slot is configured with $N_{symb}^{slot}$ consecutive OFDM symbols and $N_{symb}^{slot}$ is determined according to CP. A start

of a slot $n_s^\mu$ in a subframe is temporally arranged with a start of an OFDM symbol $n_s^\mu N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

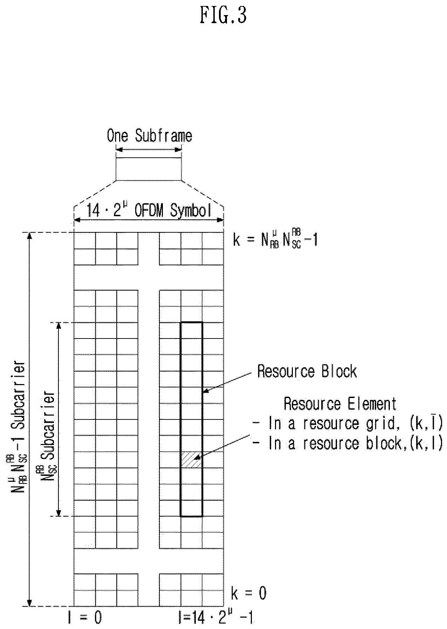

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing. FIG. 3 illustrates a resource grid in a wireless communication system to which the present disclosure may be applied. In reference to FIG. 3, it is illustratively described that a resource grid is configured with $N_{RB}^\mu N_{sc}^{RB}$ subcarriers in a frequency domain and one subframe is configured with $14 \cdot 2^\mu$ OFDM symbols, but it is not limited thereto. In an NR system, a transmitted signal is described by OFDM symbols of $2^\mu N_{symb}(\mu)$ and one or more resource grids configured with $N_{RB}^\mu N_{sc}^{RB}$ subcarriers. Here, $N_{RB}^\mu \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, $k=0,...,N_{RB}^\mu N_{sc}^{RB}-1$ is an index in a frequency domain and $l'=0,...,2^\mu N_{symb}^{(\mu)}-1$ refers to a position of a symbol in a subframe. When referring to a resource element in a slot, an index pair (k,l) is used. Here, $l=0, ... ,N_{symb}^\mu-1$. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain. Point A plays a role as a common reference point of a resource block grid and is obtained as follows. offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2. absoluteFrequencyPointA represents a frequency-position of point A expressed as in ARFCN (absolute radiofrequency channel number). Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^\mu$ and a resource element (k,l) for a subcarrier spacing configuration $\mu$ in a frequency domain is given as in the following Equation 1.

【Equation 1】

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

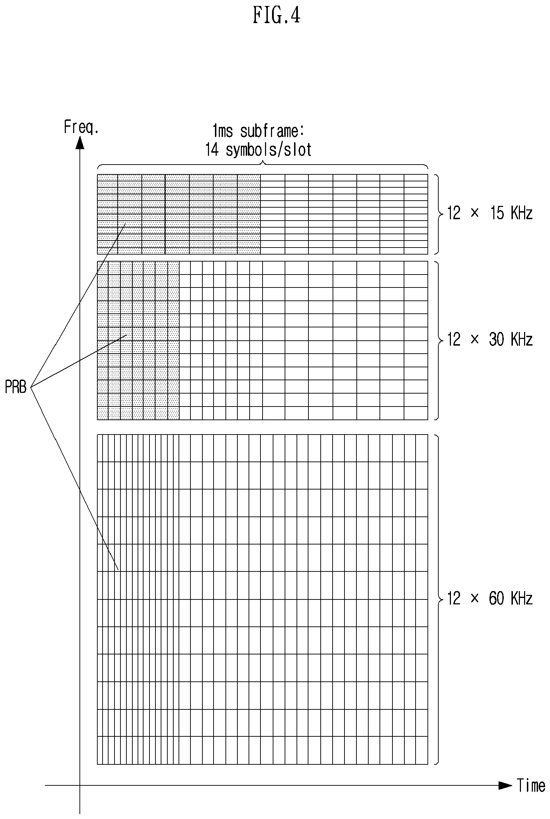

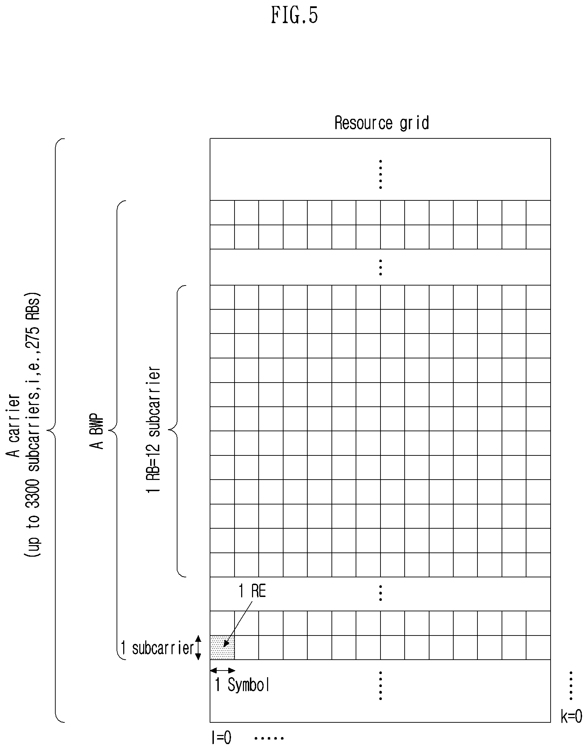

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

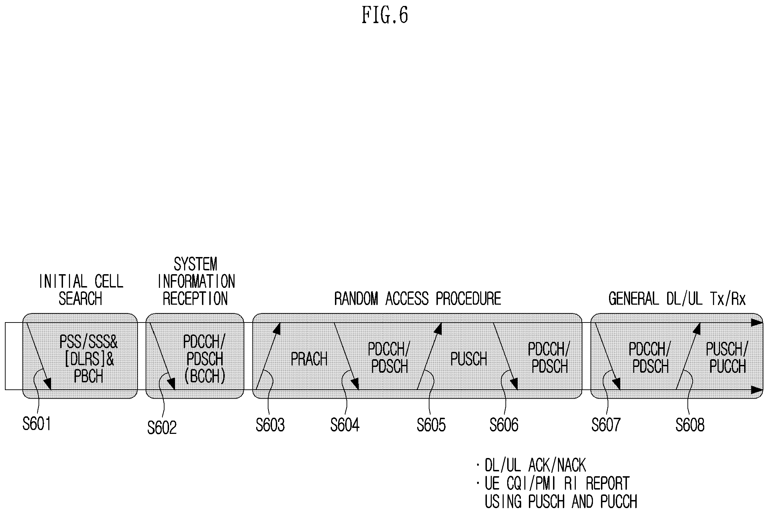

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH (Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted. Next, DCI formats 1_0, 1_1 and 1_2 may include resource information (e.g., frequency resource allocation, time resource allocation, VRB(virtual resource block)-PRB(physical resource block) mapping, etc.), information-related to a transport block(TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined. DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Downlink transmission/reception operation

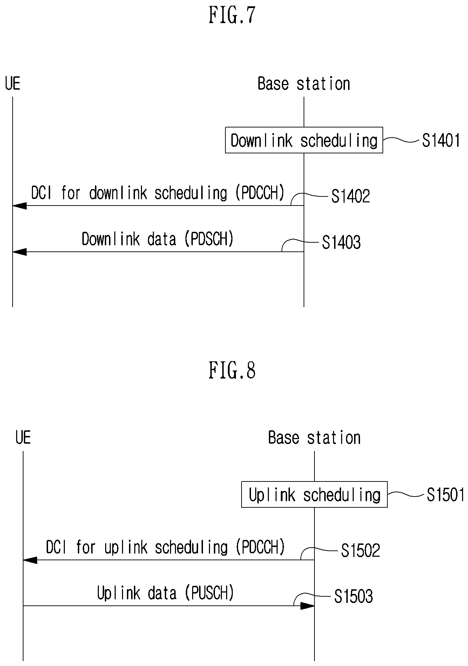

FIG. 7 is a diagram illustrating downlink transmission and reception operations in a wireless communication system to which the present disclosure may be applied.

Referring to FIG. 7, a base station schedules downlink transmission such as a frequency/time resource, a transport layer, a downlink precoder, an MCS, etc. (S1401). In particular, a base station can determine a beam for PDSCH transmission to a UE through the operations described above.

A UE receives DCI for downlink scheduling (i.e., including scheduling information of a PDSCH) from a base station on a PDCCH (S1402).

DCI format 1_0, 1_1, or 1_2 may be used for downlink scheduling, and in particular, DCI format 1_1 includes the following information: an identifier for a DCI format, a bandwidth part indicator, a frequency domain resource assignment, a time domain resource assignment, a PRB bundling size indicator, a rate matching indicator, a ZP CSI-RS trigger, antenna port(s), a transmission configuration indication (TCI), an SRS request, a DMRS (Demodulation Reference Signal) sequence initialization

In particular, a number of DMRS ports may be scheduled according to each state indicated in an antenna port(s) field, and also single-user (SU)/multi-user (MU) user transmission scheduling is possible.

In addition, a TCI field is composed of 3 bits, and a QCL for a DMRS is dynamically indicated by indicating up to 8 TCI states according to a TCI field value.

A UE receives downlink data from a base station on a PDSCH (S1403).

When a UE detects a PDCCH including DCI formats 1_0, 1_1, and 1_2, it decodes a PDSCH according to indications by corresponding DCI.

Here, when a UE receives a PDSCH scheduled by DCI format 1, a DMRS configuration type may be configured for the UE by a higher layer parameter 'dmrs-Type', and a DMRS type is used to receive a PDSCH. In addition, a maximum number of front-loaded DMRA symbols for the PDSCH may be configured for a terminal by a higher layer parameter 'maxLength'.

For DMRS configuration type 1, if a single codeword is scheduled for a UE and an antenna port mapped to an index of {2, 9, 10, 11 or 30} is indicated or if a single codeword is scheduled and an antenna port mapped to an index of {2, 9, 10, 11 or 12} or {2, 9, 10, 11, 30 or 31} is indicated, or if two codewords are scheduled, the UE assumes that all remaining orthogonal antenna ports are not associated with PDSCH transmission to another UE.

Alternatively, for DMRS configuration type 1, if a single codeword is scheduled for a UE and an antenna port mapped to an index of {2, 10 or 23} is indicated, or if a single codeword is scheduled and an antenna port mapped to an index of {2, 10, 23 or 24} or {2, 10, 23 or 58} is indicated, or if two codewords are scheduled for a UE, the UE assumes that all remaining orthogonal antenna ports are not associated with PDSCH transmission to another UE.

When a UE receives a PDSCH, a precoding unit (precoding granularity) P' may be assumed to be a contiguous resource block in a frequency domain. Here, P' may correspond to one of {2, 4, wideband}.

If P' is determined to be wideband, a UE does not expect to be scheduled with non-contiguous PRBs, and a UE can assume that the same precoding is applied to allocated resources.

On the other hand, if P' is determined to be one of {2, 4}, a precoding resource block group (PRG) is divided into P' consecutive PRBs. An actual number of consecutive PRBs in each PRG may be one or more. A UE may assume that the same precoding is applied to consecutive downlink PRBs within a PRG.

In order for a UE to determine a modulation order, a target code rate, and a transport block size in a PDSCH, the UE first reads a 5-bit MCD field in DCI and determines a modulation order and a target code rate. Then, the UE reads a redundancy version field in the DCI and determines a redundancy version. Then, a UE determines a transport block size using a number of layers and a total number of allocated PRBs before rate matching.

1) Downlink semi-persistent scheduling (SPS)

Downlink SPS combines persistent scheduling through higher layer signaling (RRC, etc.) and dynamic scheduling through lower layer signaling (DCI, etc.). Persistent scheduling is used for periodic resource allocation for the first transmission of a transport block (TB). Dynamic scheduling is used to allocate resources for retransmission when retransmission is required.

Although not shown in FIG. 7, persistent scheduling through higher layer signaling (RRC, etc.) may be transmitted before dynamic scheduling (S1402) of lower layer signaling (DCI, etc.).

A UE can report support of SPS to a base station using a downlinkSPS flag in UE capability information.

For SPS, RRC signaling and physical layer signaling on a PDCCH are used in combination. RRC signaling (e.g., SPS-Config IE) provides a subset of resource allocation information, and additional information is provided by a PDCCH. Additionally, a PDCCH is used as a trigger for activation/release.

Table 6 shows an example of SPS-Config IE. SPS-Config IE is used to configure downlink semi-persistent transmission. Multiple downlink SPS configurations can be configured within one BWP of a serving cell.

【Table 6】

```
-- ASN1START
-- TAG-SPS-CONFIG-START

SPS-Config ::=                    SEQUENCE {
    periodicity                       ENUMERATED {ms10, ms20, ms32, ms40, ms64, ms80, ms128,
ms160, ms320, ms640,

                                                  spare6, spare5, spare4, spare3,

spare2, spare1},
    nrofHARQ-Processes                INTEGER (1..8),
    n1PUCCH-AN                        PUCCH-ResourceId
OPTIONAL,    -- Need M
    mcs-Table                         ENUMERATED {qam64LowSE}
OPTIONAL,    -- Need S
    ...,
    [[
    sps-ConfigIndex-r16               SPS-ConfigIndex-r16
OPTIONAL,    -- Cond SPS-List
    harq-ProcID-Offset-r16            INTEGER (0..15)
OPTIONAL,    -- Need R
    periodicityExt-r16                INTEGER (1..5120)
OPTIONAL,    -- Need R
    harq-CodebookID-r16               INTEGER (1..2)
OPTIONAL,    -- Need R
    pdsch-AggregationFactor-r16       ENUMERATED {n1, n2, n4, n8 }
OPTIONAL    -- Need S
    ]]
}

-- TAG-SPS-CONFIG-STOP
-- ASN1STOP
```

In Table 6, the periodicity represents a period of downlink SPS, which means a time interval between consecutive persistent resource allocations. The periodicityExt is used to calculate a period of downlink SPS, and if this parameter does not exist, the periodicity is ignored. An SPS period supports different values depending on the configured subcarrier spacing.

The nrofHARQ-Processes indicates a number of a HARQ process configured for downlink SPS. For dynamic resource allocation, a HARQ process identifier is specified within DCI associated with each resource allocation. However, in downlink SPS, a HARQ process identifier is determined based on a value of the nrofHARQ-Processes and a value of the periodicity.

The n1PUCCH-AN indicates a HARQ resource of a PUCCH for downlink SPS. An actual PUCCH-Resource is configured according to a value of the n1PUCCH-AN, and based on this, a PUCCH resource for transmitting a HARQ ACK to a base station is identified.

The mcs-Table indicates an MCS table used by a UE for downlink SPS.

The pdsch-AggregationFactor represents a repetition number of an SPS PDSCH and can have one value among {1,2,4,8}. If this field does not exist, a UE applies the pdsch-AggregationFactor of PDSCH-Config. That is, a UE repeatedly receives the same downlink data/transport block (TB) in consecutive slots.

When receiving a scheduled PDSCH without transmitting a corresponding PDCCH using SPS-config, the same symbol allocation is applied over consecutive slots according to the configured repetition number (pdsch-Aggregation-Factor). That is, a UE repeatedly receives a downlink TB from the same symbol over several consecutive slots according to the configured repetition number. When repetitive transmission is configured, a PDSCH is limited to a single transmission layer.

In a PDSCH scheduled without corresponding PDCCH transmission using SPS-config, a time interval for reception according to the number of repetitions (pdsch-AggregationFactor) is not greater than a period interval derived by a period obtained from SPS-config.

A redundancy version (rv_id) is determined differently for each TO of a TB. For a PDSCH scheduled without corresponding PDCCH transmission using SPS-config, a redundancy version indicated by DCI is assumed to be 0.

When a UE configured with SPS in a higher layer receives DCI on a PDCCH, the UE first verifies whether a downlink SPS assignment PDCCH is valid.

    i) A CRC in a DCI format is scrambled by a CS (Configured Scheduling)-RNTI; and

    ii) a new data indicator (NDI) in a DCI format for a TB is set to 0; and

    iii) When validation is for scheduling activation, and a PDSCH-to-HARQ feedback timing indicator field in a DCI format is present, if the PDSCH-to-HARQ feedback timing indicator field does not provide an inapplicable value,

A UE determines that a downlink SPS assignment PDCCH is valid for scheduling activation/scheduling release.

Next, a UE verifies whether a DCI format is valid as follows.

When a UE is provided with a single configuration for an SPS PDSCH, verification of a DCI format is achieved when all fields of a DCI format are set according to Table 7 or Table 8 below.

Table 7 illustrates fields for verifying single downlink SPS scheduling activation when a UE is provided with a single SPS PDSCH configuration in a downlink BWP of a scheduled cell.

[Table 7]

|  | DCI format 1_1 |
| --- | --- |
| HARQ process number | set to all '0's |
| Redundancy version | For the enabled transport block: set to all '0's |

Table 8 illustrates fields for verifying single downlink SPS scheduling release when a UE is provided with a single SPS PDSCH configuration in a downlink BWP of a scheduled cell.

[Table 8]

|  | DCI format 1_0/1_1/1_2 |
| --- | --- |
| HARQ process number | set to all '0's |
| Redundancy version | set to all '0's |
| Modulation and coding scheme | set to all '1's |
| Frequency domain resource assignment | - set to all '0's for FDRA Type 0 or for dynamicSwitch<br>- set to all '1's for FDRA Type 1 |

When a UE is provided with one or more SPS PDSCH configurations, when a HARQ process number field in a DCI format indicated to activate an SPS PDSCH configuration with the same value as an index (i.e., sps-ConfigIndex) of a specific configuration among one or more SPS PDSCH configurations, and when a redundancy version (RV) field of a DCI format is set as shown in Table 7 above, verification of a DCI format for SPS PDSCH activation is achieved.

When a UE is provided with one or more SPS PDSCH configurations, when a HARQ process number field in a DCI format indicates to release an SPS PDSCH with the same value as an index (i.e., sps-ConfigDeactivationStateList or sps-ConfigIndex) of a specific configuration among one or more SPS PDSCH configurations, and when RV, MCS (modulation and coding scheme), and FDRA (frequency domain resource assignment) fields of a DCI format are all set as shown in Table 8, verification of a DCI format for SPS PDSCH release is achieved.

2) PDSCH repetition

A UE may be configured to repeatedly receive a PDSCH. In this case, a UE repeatedly receives the same downlink data/transport block (TB) in consecutive slots.

The number of repetitions for a downlink TB (e.g., higher layer parameter pdsch-AggregationFactor) may have one of {2, 4, 8} values. That is, the same TB can be transmitted in 2 consecutive slots, 4 slots, or 8 slots. There is one TB transmission (i.e., one transmission occasion (TO)) within each slot. If the number of repetitions is not set (i.e., if there is no pdsch-AggregationFactor), a UE applies a value of 1.

When a UE receives a PDSCH scheduled by DCI, if the UE is configured with repetition number > 1 (e.g., pdsch-AggregationFactor > 1), the same symbol allocation is applied across consecutive slots according to the configured number of repetitions. That is, a UE repeatedly receives a downlink TB from the same symbol over several consecutive slots according to the configured repetition number. When repetitive transmission is configured, a PDSCH is limited to a single transmission layer.

A redundancy version (rv_id) is determined differently for each TO of a TB. That is, based on a redundancy version indicated by DCI scheduling a PDSCH, a redundancy version applied to the n-th TO is determined according to Table 9 below.

Table 9 illustrates aredundancy version applied when pdsch-AggregationFactor exists.

[Table 9]

| rv_id indicated by the DCI scheduling the PDSCH | rv_id to be applied to nth transmission occasion | | | |
|---|---|---|---|---|
| | n mod 4 = 0 | n mod 4 = 1 | n mod 4 = 2 | n mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

Uplink transmission and reception operation

FIG. 8 is a diagram illustrating an uplink transmission and reception operation in a wireless communication system to which the present disclosure can be applied.

Referring to FIG. 8, a base station schedules uplink transmission such as a frequency/time resource, a transport layer, an uplink precoder, an MCS, etc. (S1501). In particular, a base station can determine a beam for PUSCH transmission to a UE through the operations described above.

A UE receives DCI for uplink scheduling (i.e., including scheduling information of a PUSCH) from a base station on a PDCCH (S1502).

DCI format 0_0, 0_1, or 0_2 may be used for uplink scheduling, and in particular, DCI format 0_1 includes the following information: an identifier for a DCI format, a UL/SUL (supplementary uplink) indicator, a bandwidth part indicator, a frequency domain resource assignment, a time domain resource assignment, a frequency hopping flag, a modulation and coding scheme (MCS), an SRS resource indicator (SRI), precoding information and number of layers, antenna port(s), an SRS request, a DMRS sequence initialization, a UL-SCH (Uplink Shared Channel) indicator

In particular, SRS resources configured in an SRS resource set associated with the higher upper layer parameter 'usage' may be indicated by an SRS resource indicator field. Additionally, the 'spatialRelationInfo' can be configured for each SRS resource, and its value can be one of {CRI, SSB, SRI}.

A UE transmits uplink data to a base station on a PUSCH (S1503).

When a UE detects a PDCCH including DCI formats 0_0, 0_1, and 0_2, it transmits a PUSCH according to indications by corresponding DCI.

Two transmission methods are supported for PUSCH transmission: codebook-based transmission and non-codebook-based transmission:

i) When the higher layer parameter 'txConfig' is set to 'codebook', a UE is configured to codebook-based transmission. On the other hand, when the higher layer parameter 'txConfig' is set to 'nonCodebook', a UE is configured to non-codebook based transmission. If the up higher per layer parameter 'txConfig' is not set, a UE does not expect to be scheduled by DCI format 0_1. When a PUSCH is scheduled by DCI format 0_0, PUSCH transmission is based on a single antenna port.

For codebook-based transmission, a PUSCH may be scheduled in DCI format 0_0, DCI format 0_1, DCI format 0_2, or semi-statically. If this PUSCH is scheduled by DCI format 0_1, a UE determines a PUSCH transmission precoder based on an SRI, a TPMI (Transmit Precoding Matrix Indicator), and a transmission rank from DCI, as given by an SRS resource indicator field and a precoding information and number of layers field. A TPMI is used to indicate a precoder to be applied across antenna ports, and corresponds to an SRS resource selected by an SRI when multiple SRS resources are configured. Alternatively, if a single SRS resource is configured, a TPMI is used to indicate a precoder to be applied across antenna ports and corresponds to that single SRS resource. A transmission precoder is selected from an uplink codebook having the same number of antenna ports as the higher layer parameter 'nrofSRS-Ports'. When a UE is configured with the higher layer parameter 'txConfig' set to 'codebook', the UE is configured with at least one SRS resource. An SRI indicated in slot n is associated with the most recent transmission of an SRS resource identified by the SRI, where the SRS resource precedes a PDCCH carrying the SRI (i.e., slot n). ii) For non-codebook based transmission, a PUSCH may be scheduled in DCI format 0_0, DCI format 0_1, or semi-statically. When multiple SRS resources are configured, a UE can determine a PUSCH precoder and a transmission rank based on a wideband SRI, where, the SRI is given by an SRS resource indicator in DCI or by the higher layer parameter 'srs-ResourceIndicator'. A UE uses one or multiple SRS resources for SRS transmission, where the number of SRS resources can be configured for simultaneous transmission within the same RB based on a UE capability. Only one SRS port is configured for each SRS resource. Only one SRS resource can be configured with the higher layer parameter 'usage' set to 'nonCodebook'. The maximum number of SRS resources that can be configured for non-codebook based uplink transmission is 4. An SRI indicated in slot n is associated with the most recent transmission of an SRS resource identified by the SRI, where the SRS transmission precedes a PDCCH carrying the SRI (i.e., slot n).

1) Uplink configured grant

PUSCH configured grant is divided into CG (configured grant) Type 1 and CG Type 2.

In CG Type 1, resource allocation is completely configured or released using RRC signaling. When CG Type 1 is configured, a UE is allocated a resource set that can periodically transmit a PUSCH. A PDCCH is required only when retransmission is necessary. CG Type 1 PUSCH transmission is semi-statically configured to operate when receiving the higher layer parameter configuredGrantConfig including rrc-ConfiguredUplinkGrant without detection of a UL grant in DCI. A UE can perform PUSCH transmission according to the configured CG Type 1 until additional RRC signaling is reconfigured to the UE.

In CG Type 2, resource allocation is partially configured using RRC signaling, and activation/deactivation is indicated using PDCCH transmission. Since a PDCCH also provides time and frequency resource allocation, resource allocation may vary each time it is activated. CG Type 2 PUSCH transmission is scheduled semi-persistently by a UL grant in valid activation DCI after receipt of the higher layer parameter configuredGrantConfig that does not include rrc-ConfiguredUplinkGrant.

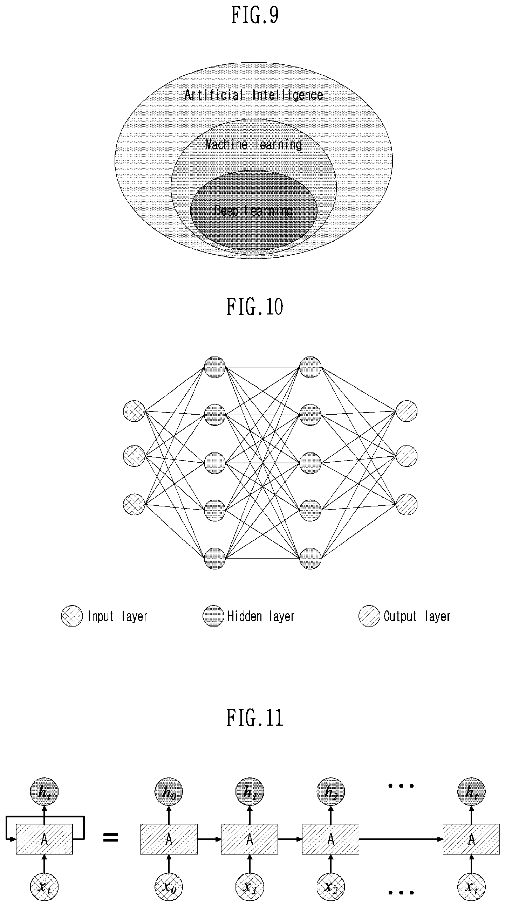

Although not shown in FIG. 9, higher layer signaling (RRC, etc.) for a PUSCH configured grant may be transmitted before lower layer signaling (DCI, etc.) for uplink scheduling.

One or more CG configurations of CG Type 1 and/or CG Type 2 may be activated simultaneously on an activated BWP of a serving cell.

In PUSCH transmission corresponding to CG Type 1 or CG Type 2, parameters for PUSCH transmission may be provided by configuredGrantConfig.

Table 10 shows an example of configuredGrantConfig IE. configuredGrantConfig IE is used to configure uplink transmission without dynamic grant by DCI. An actual uplink grant may be configured by RRC (CG Type 1) or provided through a PDCCH (by CS-RNTI) (CG Type 2). Multiple CG configurations can be configured within one BWP of a serving cell.

【Table 10】

```
-- ASN1START
-- TAG-CONFIGUREDGRANTCONFIG-START

ConfiguredGrantConfig ::=              SEQUENCE {
    frequencyHopping                   ENUMERATED {intraSlot, interSlot}
OPTIONAL,    -- Need S
    cg-DMRS-Configuration              DMRS-UplinkConfig,
    mcs-Table                          ENUMERATED {qam256, qam64LowSE}
OPTIONAL,    -- Need S
    mcs-TableTransformPrecoder         ENUMERATED {qam256, qam64LowSE}
OPTIONAL,    -- Need S
    uci-OnPUSCH                        SetupRelease { CG-UCI-OnPUSCH }
OPTIONAL,    -- Need M
    resourceAllocation                 ENUMERATED { resourceAllocationType0,
resourceAllocationType1, dynamicSwitch },
    rbg-Size                           ENUMERATED {config2}
OPTIONAL,    -- Need S
    powerControlLoopToUse              ENUMERATED {n0, n1},
    p0-PUSCH-Alpha                     P0-PUSCH-AlphaSetId,
    transformPrecoder                  ENUMERATED {enabled, disabled}
OPTIONAL,    -- Need S
    nrofHARQ-Processes                 INTEGER(1..16),
```

```
    repK                               ENUMERATED {n1, n2, n4, n8},
    repK-RV                            ENUMERATED {s1-0231, s2-0303, s3-0000}
OPTIONAL,    -- Need R
    periodicity                        ENUMERATED {
                                         sym2, sym7, sym1x14, sym2x14, sym4x14,
sym5x14, sym8x14, sym10x14, sym16x14, sym20x14,
                                         sym32x14, sym40x14, sym64x14, sym80x14,
sym128x14, sym160x14, sym256x14, sym320x14, sym512x14,
                                         sym640x14, sym1024x14, sym1280x14,
sym2560x14, sym5120x14,
                                         sym6, sym1x12, sym2x12, sym4x12, sym5x12,
sym8x12, sym10x12, sym16x12, sym20x12, sym32x12,
                                         sym40x12, sym64x12, sym80x12, sym128x12,
sym160x12, sym256x12, sym320x12, sym512x12, sym640x12,
                                         sym1280x12, sym2560x12
    },
    configuredGrantTimer               INTEGER (1..64)
OPTIONAL,    -- Need R
    rrc-ConfiguredUplinkGrant          SEQUENCE {
        timeDomainOffset               INTEGER (0..5119),
        timeDomainAllocation           INTEGER (0..15),
        frequencyDomainAllocation      BIT STRING (SIZE(18)),
        antennaPort                    INTEGER (0..31),
        dmrs-SeqInitialization         INTEGER (0..1)
OPTIONAL,    -- Need R
        precodingAndNumberOfLayers     INTEGER (0..63),
        srs-ResourceIndicator          INTEGER (0..15)
OPTIONAL,    -- Need R
        mcsAndTBS                      INTEGER (0..31),
        frequencyHoppingOffset         INTEGER (1.. maxNrofPhysicalResourceBlocks-1)
OPTIONAL,    -- Need R
        pathlossReferenceIndex         INTEGER (0..maxNrofPUSCH-
PathlossReferenceRSs-1),
        ...,
        [[
        pusch-RepTypeIndicator-r16     ENUMERATED {pusch-RepTypeA,pusch-RepTypeB}
OPTIONAL,    -- Need M
        frequencyHoppingPUSCH-RepTypeB-r16  ENUMERATED {interRepetition, interSlot}
OPTIONAL,    -- Cond RepTypeB
        timeReferenceSFN-r16           ENUMERATED {sfn512}
OPTIONAL    -- Need S
        ]]
    }
OPTIONAL,    -- Need R
    ...,
```

In Table 10, the periodicity represents a period for uplink CG transmission, which means a time interval between consecutive continuous resource allocations. The periodicityExt is used to calculate a period of a uplink CG, and if this parameter does not exist, the periodicity is ignored. Values supported for an uplink CG period vary depending on the configured subcarrier spacing.

The nrofHARQ-Processes indicates a number of a HARQ process configured for an uplink CG. For dynamic resource allocation, a HARQ process identifier is specified within DCI associated with each resource allocation. However, in an uplink CG, an identifier of a HARQ process is determined based on a value of the nrofHARQ-Processes and a value of the periodicity.

The repK represents the number of repetitions. That is, it indicates a repetition level for each PUSCH transmission. The repK can have one of the following values: {1,2,4,8}. For CG Type 1, if the pusch-RepTypeIndicator in rrc-ConfiguredUplinkGrant indicates 'pusch-RepTypeB', PUSCH repetition type B is applied, otherwise, PUSCH repetition type A is applied. In the case of CG Type 2, a PUSCH repetition type is determined by a UL grant of DCI. According to the configured PUSCH repetition type A or B, a UE transmits an uplink TB repeatedly as many times as the configured repetition number.

The repK-RV represents a redundancy version sequence. The repK-RV is configured when a repetition is used (i.e., repK is set to one of {2,4,8}).

The resourceAllocation indicates a configuration of bitmap-based resource allocation type 0 or resource indication value (RIV)-based resource allocation type 1.

The mcs-Table indicates an MCS table used by a UE for a PUSCH in which a transform precoding is not used, and the mcs-TableTransformPrecoder indicates an MCS table used by a UE for a PUSCH in which a transform precoding is used. The transformPrecoder indicates whether a transform precoding is enabled for a PUSCH.

The rrc-ConfiguredUplinkGrant is a configuration for CG Type 1 transmission. If this field does not exist, a UE uses an UL grant configured by DCI with a CS-RNTI (i.e., CG Type 2). The timeDomainAllocation indicates a start symbol and a length of a PUSCH and a PUSCH mapping type. The timeDomainOffset represents an offset related to a reference SFN (system frame number) indicated by the timeReferenceSFN. The timeReferenceSFN indicates an SFN used to determine an offset of a resource in a time domain. A UE uses an SFN closest to a number indicated before receiving a configured grant configuration, and if this field does not exist, a reference SFN is 0.

When a UE configured a configured grant by a higher layer receives DCI on a PDCCH, the UE first verifies whether the configured UL grant Type 2 PDDCH is valid.

i) A CRC in a DCI format is scrambled by a CS (Configured Scheduling)-RNTI; and
ii) a new data indicator (NDI) in a DCI format for a TB is set to 0; and
iii) When validation is for scheduling activation, and a PDSCH-to-HARQ feedback timing indicator field in a DCI format is present, if the PDSCH-to-HARQ feedback timing indicator field does not provide an inapplicable value,

A UE determines that the configured UL grant Type 2 PDDCH for scheduling activation/scheduling release is valid.

Next, a UE verifies whether a DCI format is valid as follows.

When a UE is provided with a single configuration for UL grant Type 2 PUSCH, verification of a DCI format is achieved when all fields of the DCI format are configured according to Table 11 or Table 12 below.

Table 11 illustrates fields for verification of single UL grant Type 2 scheduling activation when a UE is provided with a single UL grant Type 2 configuration in an uplink BWP of a scheduled cell.

[Table 11]

| | DCI format 0_0/0_1/0_2 |
|---|---|
| HARQ process number | set to all '0's |
| Redundancy version | set to all '0's |

Table 12 illustrates fields for verification of single UL grant Type 2 scheduling release when a UE is provided with a single UL grant Type 2 configuration in an uplink BWP of a scheduled cell.

[Table 12]

| | DCI format 0_0/0_1/0_2 |
|---|---|
| HARQ process number | set to all '0's |
| Redundancy version | set to all '0's |

(continued)

| Modulation and coding scheme | set to all '1's |
|---|---|
| Frequency domain resource assignment | - set to all '0's for FDRA Type 2 with $\mu=1$<br>- set to all '1's, otherwise |

When a UE is provided with one or more UL grant Type 2 PUSCH configurations, when a HARQ process number field in a DCI format indicates UL grant Type 2 PUSCH configuration activation with a value equal to the index (i.e., ConfiguredGrantConfigIndex) of a specific configuration among one or more UL grant Type 2 PUSCH configurations, and when a RV (redundancy version) field of a DCI format is configured as shown in Table 11 above, verification of the DCI format for UL grant Type 2 PUSCH activation is achieved. When a UE is provided with one or more UL grant Type 2 PUSCH configurations, when a HARQ process number field in a DCI format indicates release of the UL grant Type 2 PUSCH configuration with a value equal to an index of a specific configuration among one or more UL grant Type 2 PUSCH configurations (i.e., ConfiguredGrantConfigType2DeactivationStateList or ConfiguredGrantConfigIndex), and when RV, MCS (modulation and coding scheme), and FDRA (frequency domain resource assignment) fields of a DCI format are all set as shown in Table 12, verification of a DCI format for UL grant Type 2 PUSCH release is achieved.

When a UE is scheduled to transmit a TB on a PUSCH by DCI, a 'Time domain resource assignment' field value of a UL grant in DCI provides a row value of a resource allocation table.

Each row of a resource allocation table defines parameters for time domain resource allocation, specifically, a slot offset (K_2) and a start and length indicator (SLIV) (or directly a starting symbol (S) and an allocation length (L)), a PUSCH mapping type, and a repetition number (when numberOfRepetitions is present) to be applied to PUSCH transmission are defined.

A resource allocation table may be configured by the higher layer parameter PUSCH-TimeDomainResourceAllocationList, or may be a predefined table.

The PUSCH-TimeDomainResourceAllocationList (i.e., resource allocation table) includes one or more PUSCH-TimeDomainResourceAllocation IEs. PUSCH-TimeDomainResourceAllocation IE is used to establish a time domain relationship between a PDCCH and a PUSCH, and configure parameters for the above-described time domain resource allocation. A 'Time domain resource assignment' field in DCI, a value of 0 indicates the first element (TimeDomainResourceAllocation) in the list (i.e., the first row of the resource allocation table), a value of 1 indicates the second element in the list, and so on.

A UE may be configured to transmit a PUSCH repeatedly. In this case, a UE repeatedly transmits the same uplink data/transport block (TB).

A PUSCH repetition transmission method can be divided into PUSCH repetition type A and PUSCH repetition type B.

When a UE is scheduled by DCI format 0_1 or DCI format 0_2, if a PUSCH repetition type (i.e., pusch-RepTypeIndicatorDCI-0-1 or pusch-RepTypeIndicatorDCI-0-2) is set to PUSCH repetition Type B (i.e., 'pusch-RepTypeB'), the UE applies the PUSCH repetition Type B procedure when determining time domain resource allocation.

Otherwise, a UE applies the PUSCH repetition Type A procedure when determining time domain resource allocation for a PUSCH scheduled by a PDCCH.

2) PUSCH repetition

- PUSCH repetition type A

PUSCH repetition type A transmission refers to a slot level PUSCH repetition in which the same uplink data (TB or CSI) is transmitted repeatedly in consecutive slots, including only one repetition in one slot.

In PUSCH repetition type A transmission, a start symbol S of a PUSCH relative to a start of a slot, and a consecutive symbols L counted from a symbol S allocated for a PUSCH, are determined from a start and length indicator (SLIV) of an indicated row of a resource allocation table.

If a repetition number configuration (i.e., numberOfRepetitions) exists in a resource allocation table, a repetition number K is determined by the repetition number configuration (i.e., numberOfRepetitions). Otherwise, a number of repetitions for an uplink TB (e.g., higher layer parameter pusch-AggregationFactor) may have one of {2, 4, 8} values. That is, the same TB can be transmitted in 2 consecutive slots, 4 slots, or 8 slots. There is one TB transmission (i.e., one TO) in each slot. If a number of repetitions is not configured (i.e., if there is no pusch-AggregationFactor), a UE applies a value of 1.

When a UE transmits a PUSCH scheduled by DCI, if the UE is configured with a repetition count > 1 (e.g., pusch-AggregationFactor > 1), the same symbol allocation is applied across consecutive slots according to the configured number of repetitions. That is, a UE repeatedly transmits an uplink TB in the same symbol over several consecutive slots according to the configured repetition number. When repetitive transmission is configured, a PUSCH is limited to a single transmission layer.

In PUSCH repetition type A or B, a redundancy version (rv_id) is determined differently for each TO of a TB. That is, based on a redundancy version indicated by DCI scheduling a PUSCH, a redundancy version applied to the n-th TO is determined according to Table 13 below.

Table 13 illustrates a redundancy version for PUSCH transmission.

[Table 13]

| rv_id indicated by the DCI scheduling the PUSCH | rv_id to be applied to nth transmission occasion (repetition Type A) or nth actual repetition (repetition Type B) | | | |
|---|---|---|---|---|
| | n mod 4 = 0 | n mod 4 = 1 | n mod 4 = 2 | n mod 4 = 3 |
| 0 | 0 | 2 | 3 | 1 |
| 2 | 2 | 3 | 1 | 0 |
| 3 | 3 | 1 | 0 | 2 |
| 1 | 1 | 0 | 2 | 3 |

For PUSCH repetition type A, intra-slot frequency hopping or inter-slot frequency hopping can be configured. In the case of inter-slot frequency hopping, frequency hopping occurs at a slot boundary. In the case of intra-slot frequency hopping, the number of symbols in the first hop and the number of symbols in the second hop are configured by the base station, and frequency hopping is performed at the configured symbol boundary.

PUSCH repeat type B

PUSCH repetition type B transmission refers to a symbol level PUSCH repetition in which the same uplink data (TB or CSI) is repeatedly transmitted, including two or more repetitions in one slot.

In PUSCH repetitive type B transmission, a start symbol S of a PUSCH relative to a start of a slot, and a consecutive symbols L counted from a symbol S allocated for a PUSCH are respectively determined by a start symbol (i.e., startSymbol) and length (i.e., length) of an indicated row of a resource allocation table.

A nominal repetition number of PUSCH repetition type B is given by a repetition number configuration (i.e., numberOfRepetitions) in a resource allocation table. And, a start slot, a start symbol, an end slot, and an end symbol of the n-th nominal repetition (n=0,..., numberOfRepetitions-1) are determined based on a slot offset (K_2), an S value, and an L value to be applied to PUSCH transmission, respectively.

Here, a nominal number of repetitions means a number of repetitions indicated by RRC signaling, etc. For example, if one nominal repetition passes (including) a slot boundary (or DL/UL switching point), the one nominal repetition may be divided into two before and after the slot boundary (or DL/UL switching point), therefore an actual number of repetitions may be greater than the nominal number of repetitions.

A UE determines invalid symbol(s) for PUSCH repetition type B transmission based on predetermined methods. After determining invalid symbol(s) for PUSCH repetition Type B transmission for each nominal repetition, the remaining symbols are considered as potential valid symbol(s) for PUSCH repetition Type B transmission. If the number of potentially valid symbols for PUSCH repetition type B transmission for one nominal repetition is greater than 0, the nominal repetition includes one or more actual repetitions. Here, each actual repetition includes a contiguous set of all potentially valid symbols that can be used for PUSCH repetition type B within the slot. Except in the case of L=1, actual repetition for a single symbol is omitted, and actual repetition may be omitted under predetermined conditions.

A redundancy version applied on the n-th actual repetition (including the case where actual repetition is omitted) is determined according to Table 13 described above.

For PUSCH repetition type B, inter-repetition frequency hopping or inter-slot frequency hopping can be configured. In the case of inter-repetition frequency hopping, frequency hopping is applied per nominal number of repetitions. In the case of inter-slot frequency hopping, frequency hopping occurs at a slot boundary.

Artificial Intelligence (AI) operation

With the technological advancement of artificial intelligence/machine learning (AI/ML), node(s) and UE(s) in a wireless communication network are becoming more intelligent/advanced. In particular, due to the intelligence of networks/base stations, it is expected that it will be possible to rapidly optimize and derive/apply various network/base station decision parameter values (e.g., transmission/reception power of each base station, transmission power of each UE, precoder/beam of base station/UE, time/frequency resource allocation for each UE, duplex method of each base station, etc.) according to various environmental parameters (e.g., distribution/location of base stations, distribution/location/material of buildings/furniture, etc., location/movement direction/speed of UEs, climate information, etc.). Following this trend, many standardization organizations (e.g., 3GPP, O-RAN) are considering introduction, and studies on this are also actively underway.

FIG. 9 illustrates a classification of artificial intelligence.

Referring to FIG. 9, artificial intelligence (AI) corresponds to all automation in which machines can replace work that should be done by humans.

Machine Learning (ML) refers to a technology in which machines learn patterns for decision-making from data on their own without explicitly programming rules.

Deep Learning is an artificial neural network-based model that allows a machine to perform feature extraction and decision from unstructured data at once. The algorithm relies on a multi-layer network of interconnected nodes for feature extraction and transformation, inspired by the biological nervous system, or Neural Network. Common deep learning network architectures include deep neural networks (DNNs), recurrent neural networks (RNNs), and convolutional neural networks (CNNs) .

AI (or referred to as AI/ML) can be narrowly referred to as artificial intelligence based on deep learning, but is not limited to this in the present disclosure. That is, in the present disclosure, AI (or AI/ML) may collectively refer to automation technologies applied to intelligent machines (e.g., UE, RAN, network nodes, etc.) that can perform tasks like humans.

AI (or AI/ML) can be classified according to various criteria as follows.

1. Offline/online learning

a) Offline Learning

Offline learning follows a sequential process of database collection, learning, and prediction. In other words, collection and learning can be performed offline, and the completed program can be installed in the field and used for prediction work.

b) Online Learning

It refers to a method of gradually improving performance by incrementally learning with additional data by taking advantage of the fact that data that can be used for recent learning is continuously generated through the Internet.

2. Classification according to AI/ML Framework concept

a) Centralized Learning

In centralized learning, training data collected from a plurality of different nodes is reported to a centralized node, all data resources/storage/learning (e.g., supervised learning, unsupervised learning, reinforcement learning, etc.) are performed in one centralized node.

b) Federated Learning

Federated learning is a collective model built on data that exists across distributed data owners. Instead of collecting data into a model, AI/ML models are imported into a data source, allowing local nodes/individual devices to collect data and train their own copies of the model, eliminating the need to report the source data to a central node. In federated learning, the parameters/weights of an AI/ML model can be sent back to the centralized node to support general model training. Federated learning has advantages in terms of increased computation speed and information security. In other words, the process of uploading personal data to the central server is unnecessary, preventing leakage and misuse of personal information.

c) Distributed Learning

Distributed learning refers to the concept in which machine learning processes are scaled and distributed across a cluster of nodes. Training models are split and shared across multiple nodes operating simultaneously to speed up model training.

3. Classification according to learning method

a) Supervised Learning

Supervised learning is a machine learning task that aims to learn a mapping function from input to output, given a labeled data set. The input data is called training data and has known labels or results. An example of supervised learning is as follows.

- Regression: Linear Regression, Logistic Regression
- Instance-based Algorithms: k-Nearest Neighbor (KNN)
- Decision Tree Algorithms: Classification and Regression Tree (CART)
- Support Vector Machines (SVM)
- Bayesian Algorithms: Naive Bayes
- Ensemble Algorithms: Extreme Gradient Boosting, Bagging: Random Forest

Supervised learning can be further grouped into regression and classification problems, where classification is predicting a label and regression is predicting a quantity.

b) Unsupervised Learning

Unsupervised learning is a machine learning task that aims to learn features that describe hidden structures in unlabeled data. The input data is not labeled and there are no known results. Some examples of unsupervised learning include K-means clustering, Principal Component Analysis (PCA), nonlinear Independent Component Analysis (ICA), and Long-Short-Term Memory (LSTM).

c) Reinforcement Learning (RL)

In reinforcement learning (RL), the agent aims to optimize long-term goals by interacting with the environment based on a trial and error process, and is goal-oriented learning based on interaction with the environment. An example of the RL algorithm is as follows.

- Q-learning
- Multi-armed bandit learning
- Deep Q Network
- State-Action-Reward-State-Action (SARSA)
- Temporal Difference Learning
- Actor-critic reinforcement learning
- Deep deterministic policy gradient (DDPG)
- Monte-Carlo tree search

Additionally, reinforcement learning can be grouped into model-based reinforcement learning and model-free reinforcement learning as follows.

- Model-based reinforcement learning: refers to RL algorithm that uses a prediction model. Using a model of the various dynamic states of the environment and which states lead to rewards, the probabilities of transitions between states are obtained.

- Model-free reinforcement learning: refers to RL algorithm based on value or policy that achieves the maximum future reward. Multi-agent environments/states are computationally less complex and do not require an accurate representation of the environment.

Additionally, RL algorithm can also be classified into value-based RL vs. policy-based RL, policy-based RL vs. non-policy RL, etc.
Hereinafter, representative models of deep learning will be exemplified.
FIG. 10 illustrates a feed-forward neural network.
A feed-forward neural network (FFNN) is composed of an input layer, a hidden layer, and an output layer.

In FFNN, information is transmitted only from the input layer to the output layer, and if there is a hidden layer, it passes through it.

FIG. 11 illustrates a recurrent neural network.

A recurrent neural network (RNN) is a type of artificial neural network in which hidden nodes are connected to directed edges to form a directed cycle. This model is suitable for processing data that appears sequentially, such as voice and text.

In FIG. 11, A represents a neural network, $x_t$ represents an input value, and $h_t$ represents an output value. Here, $h_t$ may refer to a state value representing the current state based on time, and $h_{t-1}$ may represent a previous state value.

One type of RNN is LSTM (Long Short-Term Memory), which has a structure that adds a cell-state to the hidden state of the RNN. LSTM can erase unnecessary memories by adding an input gate, forgetting gate, and output gate to the RNN cell (memory cell of the hidden layer) . LSTM adds cell state compared to RNN.

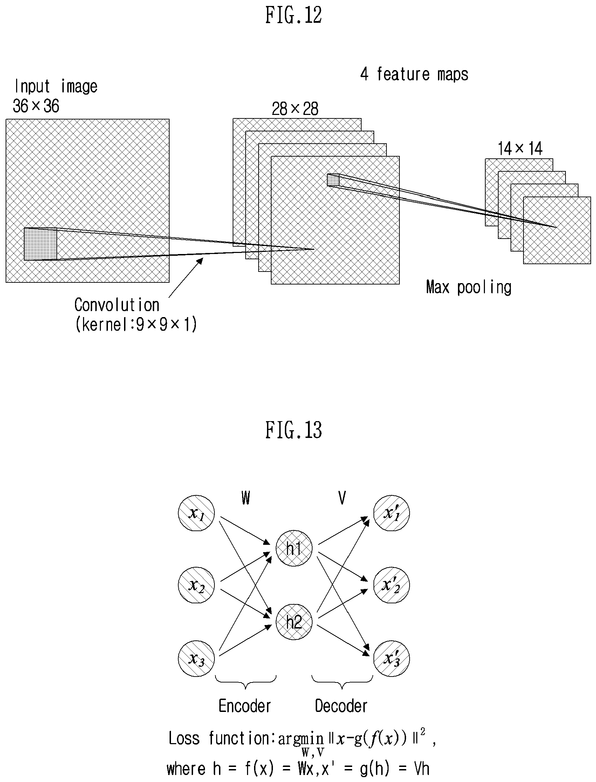

FIG. 12 illustrates a convolutional neural network.

Convolutional neural network (CNN) is used for two purposes: reducing model complexity and extracting good features by applying convolution operations commonly used in the image processing or image processing fields.

- Kernel or filter: refers to a unit/structure that applies weight to input of a specific range/unit. The kernel (or filter) can be changed through learning.
- Stride: refers to the movement range of moving the kernel within the input.
- Feature map: refers to the result of applying the kernel to input. Several feature maps can be extracted to ensure robustness to distortion, change, etc.
- Padding: refers to a value added to adjust the size of the feature map.
- Pooling: refers to an operation (e.g., max pooling, average pooling) to reduce the size of the feature map by downsampling the feature map.

FIG. 13 illustrates an auto encoder.

Auto encoder refers to a neural network that receives a feature vector x (x1, x2, x3, ...) as input and outputs the same or similar vector x' (x'1, x'2, x'3, ...)'.

Auto encoder has the same characteristics as the input node and output node. Since the auto encoder reconstructs the input, the output can be referred to as reconstruction. Additionally, auto encoder is a type of unsupervised learning.

The loss function of the auto encoder illustrated in FIG. 13 is calculated based on the difference between input and output, and based on this, the degree of input loss is identified and an optimization process is performed in the auto encoder to minimize the loss.

Hereinafter, for a more specific explanation of AI (or AI/ML), terms can be defined as follows.

- Data collection: Data collected from the network nodes, management entity or UE, as a basis for AI model training, data analytics and inference.
- AI Model: A data driven algorithm by applying AI techniques that generates a set of outputs consisting of predicted information and/or decision parameters, based on a set of inputs.

AI/ML Training: An online or offline process to train an AI model by learning features and patterns that best present data and get the trained AI/ML model for inference.

AI/ML Inference: A process of using a trained AI/ML model to make a prediction or guide the decision based on collected data and AI/ML model.

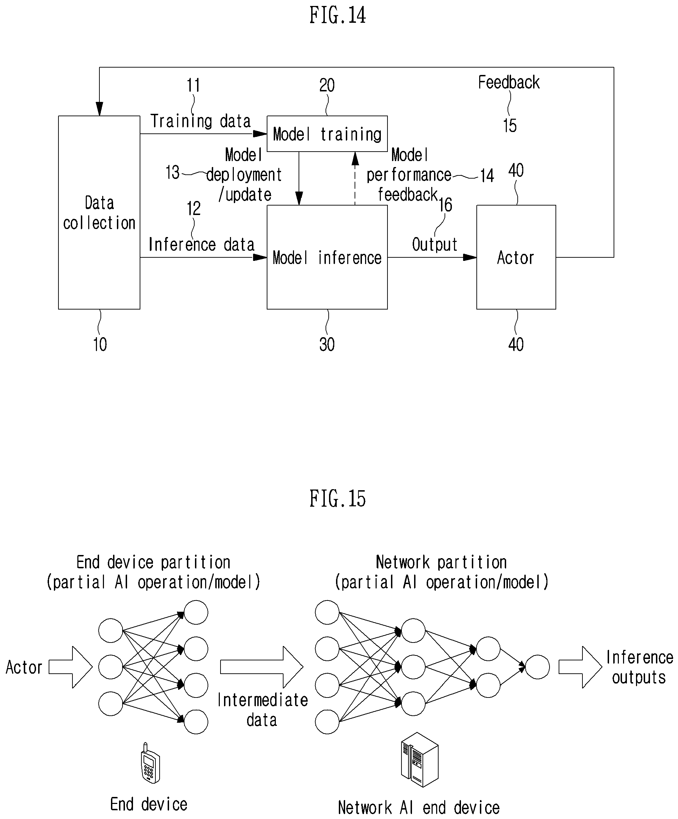

FIG. 14 illustrates a functional framework for an AI operation.

Referring to FIG. 14, the data collection function (10) is a function that collects input data and provides processed input data to the model training function (20) and the model inference function (30).

Examples of input data may include measurements from UEs or different network entities, feedback from Actor, output from an AI model.

The Data Collection function (10) performs data preparation based on input data and provides input data processed through data preparation. Here, the Data Collection function (10) does not perform specific data preparation (e.g., data pre-processing and cleaning, formatting and transformation) for each AI algorithm, and data preparation common to AI algorithms can be performed.

After performing the data preparation process, the Model Training function (10) provides Training Data (11) to the Model Training function (20) and provides Inference Data (12) to the Model Inference function (30). Here, Training Data (11) is data required as input for the AI Model Training function (20). Inference Data (12) is data required as input for the AI Model Inference function (30).

The Data Collection function (10) may be performed by a single entity (e.g., UE, RAN node, network node, etc.), but may also be performed by a plurality of entities. In this case, Training Data (11) and Inference Data (12) can be provided from a plurality of entities to the Model Training function (20) and the Model Inference function (30), respectively.

Model Training function (20) is a function that performs the AI model training, validation, and testing which may generate model performance metrics as part of the model testing procedure. The Model Training function (20) is also responsible for data preparation (e.g., data pre-processing and cleaning, formatting, and transformation) based on Training Data (11) delivered by a Data Collection function (10), if required.

Here, Model Deployment/Update (13) is used to initially deploy a trained, validated, and tested AI model to the Model Inference function (30) or to deliver an updated model to the Model Inference function (30).

Model Inference function (30) is a function that provides AI model inference output (16) (e.g., predictions or decisions). Model Inference function (30) may provide Model Performance Feedback (14) to Model Training function (20) when applicable. The Model Inference function (30) is also responsible for data preparation (e.g., data pre-processing and cleaning, formatting, and transformation) based on Inference Data (12) delivered by a Data Collection function (10), if required.

Here, Output (16) refers to the inference output of the AI model produced by a Model Inference function (30), and details of inference output may be use case specific.

Model Performance Feedback (14) may be used for monitoring the performance of the AI model, when available, and this feedback may be omitted.

Actor function (40) is a function that receives the Output (16) from the Model Inference function (30) and triggers or performs corresponding actions. The Actor function (40) may trigger actions directed to other entities (e.g., one or more UEs, one or more RAN nodes, one or more network nodes, etc.) or to itself.

Feedback (15) may be used to derive Training data (11), Inference data (12) or to monitor the performance of the AI Model and its impact to the network, etc.

Meanwhile, the definitions of training/validation/test in the data set used in AI/ML can be divided as follows.

- Training data: refers to a data set for learning a model.
- Validation data: This refers to a data set for verifying a model for which learning has already been completed. In other words, it usually refers to a data set used to prevent over-fitting of the training data set.

It also refers to a data set for selecting the best among various models learned during the learning process. Therefore, it can also be considered as a type of learning.

- Test data: refers to a data set for final evaluation. This data is unrelated to learning.

In the case of the data set, if the training set is generally divided, within the entire training set, training data and validation data can be divided into 8:2 or 7:3, and if testing is included, 6:2:2 (training: validation: test) can be used.

Depending on the capability of the AI/ML function between a base station and a UE, a cooperation level can be defined as follows, and modifications can be made by combining the following multiple levels or separating any one level.

Cat 0a) No collaboration framework: AI/ML algorithm is purely implementation-based and do not require any air interface changes.

Cat 0b) This level corresponds to a framework without cooperation but with a modified air interface tailored to efficient implementation-based AI/ML algorithm.

Cat 1) This involves inter-node support to improve the AI/ML algorithm of each node. This applies if a UE receives support from a gNB (for training, adaptation, etc.) and vice versa. At this level, model exchange between network nodes is not required.

Cat 2) Joint ML tasks between a UE and a gNB may be performed. This level requires AI/ML model command and an exchange between network nodes.

The functions previously illustrated in FIG. 14 may be implemented in a RAN node (e.g., base station, TRP, base station central unit (CU), etc.), a network node, a network operator's operation administration maintenance (OAM), or a UE.

Alternatively, the function illustrated in FIG. 14 may be implemented through cooperation of two or more entities among a RAN, a network node, an CAM of network operator, or a UE. For example, one entity may perform some of the functions of FIG. 14 and other entities may perform the remaining functions. As such, as some of the functions illustrated in FIG. 14 are performed by a single entity (e.g., UE, RAN node, network node, etc.), transmission/provision of data/information between each function may be omitted. For example, if the Model Training function (20) and the Model Inference function (30) are performed by the same entity, the delivery/provision of Model Deployment/Update (13) and Model Performance Feedback (14) can be omitted.

Alternatively, any one of the functions illustrated in FIG. 14may be performed through collaboration between two or more entities among a RAN, a network node, an CAM of a network operator, or a UE. This can be referred to as a split AI operation.

FIG. 15 is a diagram illustrating split AI inference.

FIG. 15 illustrates a case in which, among split AI operations, the Model Inference function is performed in cooperation with an end device such as a UE and a network AI/ML endpoint.

In addition to the Model Inference function, the Model Training function, the Actor, and the Data Collection function are respectively split into multiple parts depending on the current task and environment, and can be performed by multiple entities collaborating.

For example, computation-intensive and energy-intensive parts may be performed at a network endpoint, while parts sensitive to personal information and delay-sensitive parts may be performed at an end device. In this case, an end device can execute a task/model from input data to a specific part/layer and then transmit intermediate data to a network endpoint. A network endpoint executes the remaining parts/layers and provides inference outputs to one or more devices that perform an action/task.

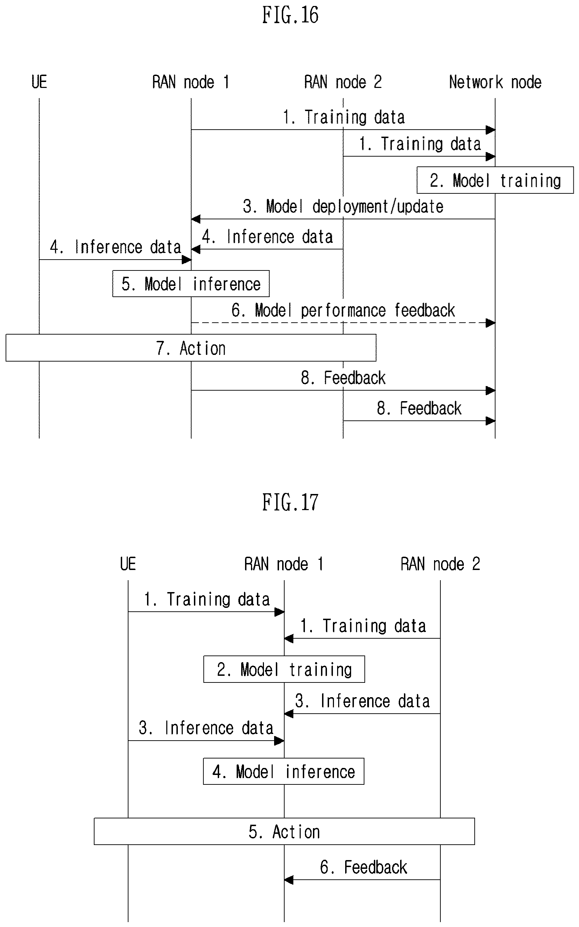

FIG. 16 illustrates an application of a functional framework in a wireless communication system.

FIG. 16 illustrates a case where the AI Model Training function is performed by a network node (e.g., core network node, network operator's OAM, etc.) and the AI Model Inference function is performed by a RAN node (e.g., base station, TRP, CU of base station, etc.).

Step 1: RAN Node 1 and RAN Node 2 transmit input data (i.e., Training data) for AI Model Training to the network node. Here, RAN Node 1 and RAN Node 2 may transmit the data collected from the UE (e.g., UE measurements related to RSRP, RSRQ, SINR of the serving cell and neighboring cells, UE location, speed, etc.) to the network node.

Step 2: The network node trains the AI Model using the received training data.

Step 3: The network node distributes/updates the AI Model to RAN Node 1 and/or RAN Node 2. RAN Node 1 (and/or RAN Node 2) may continue to perform model training based on the received AI Model.

For convenience of explanation, it is assumed that the AI Model has been distributed/updated only to RAN Node 1.

Step 4: RAN Node 1 receives input data (i.e., Inference data) for AI Model Inference from the UE and RAN Node 2.

Step 5: RAN Node 1 performs AI Model Inference using the received Inference data to generate output data (e.g., prediction or decision).

Step 6: If applicable, RAN Node 1 may send model performance feedback to the network node.

Step 7: RAN Node 1, RAN Node 2, and UE (or 'RAN Node 1 and UE', or 'RAN Node 1 and RAN Node 2') perform an action based on the output data. For example, in the case of load balancing operation, the UE may move from RAN node 1 to RAN node 2.

Step 8: RAN Node 1 and RAN Node 2 transmit feedback information to the network node.

FIG. 17 illustrates an application of a functional framework in a wireless communication system.

FIG. 17 illustrates a case where both the AI Model Training function and the AI Model Inference function are performed by a RAN node (e.g., base station, TRP, CU of the base station, etc.).

Step 1: The UE and RAN Node 2 transmit input data (i.e., Training data) for AI Model Training to RAN Node 1.

Step 2: RAN Node 1 trains the AI Model using the received training data.

Step 3: RAN Node 1 receives input data (i.e., Inference data) for AI Model Inference from the UE and RAN Node 2.

Step 4: RAN Node 1 performs AI Model Inference using the received Inference data to generate output data (e.g., prediction or decision).

Step 5: RAN Node 1, RAN Node 2, and the UE (or 'RAN Node 1 and UE', or 'RAN Node 1 and RAN Node 2') perform an action based on the output data. For example, in the case of load balancing operation, the UE may move from RAN node 1 to RAN node 2.

Step 6: RAN node 2 transmits feedback information to RAN node 1.

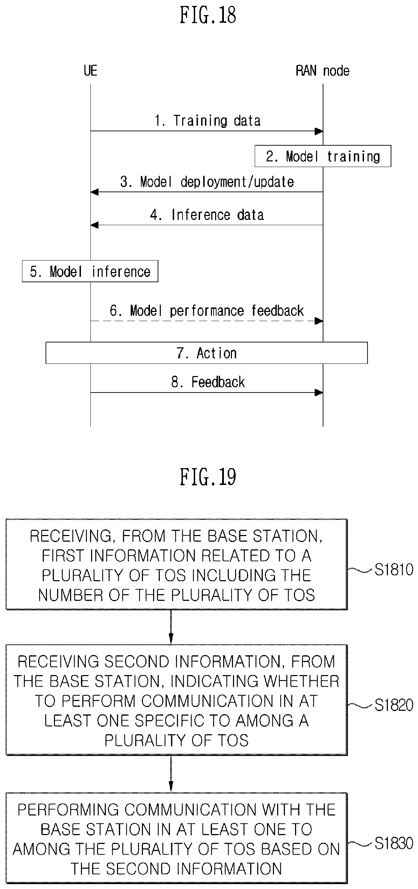

FIG. 18 illustrates an application of a functional framework in a wireless communication system.

FIG. 18 illustrates a case where the AI Model Training function is performed by a RAN node (e.g., base station, TRP, CU of the base station, etc.), and the AI Model Inference function is performed by the UE.

Step 1: The UE transmits input data (i.e., Training data) for AI Model Training to the RAN node. Here, the RAN node may collect data (e.g., measurements of the UE related to RSRP, RSRQ, SINR of the serving cell and neighboring cells, location of the UE, speed, etc.) from various UEs and/or from other RAN nodes.

Step 2: The RAN node trains the AI Model using the received training data.

Step 3: The RAN node distributes/updates the AI Model to the UE. The UE may continue to perform model training based on the received AI Model.

Step 4: The UE receives input data (i.e., Inference data) for AI Model Inference from the RAN node (and/or from other UEs).

Step 5: The UE performs AI Model Inference using the received Inference data to generate output data (e.g., prediction or decision).

Step 6: If applicable, the UE may transmit model performance feedback to the RAN node.

Step 7: The UE and the RAN node perform an action based on output data.

Step 8: The UE transmits feedback information to the RAN node.

Network/base station AI-based scenarios

Due to the development of computational processing technology and AI/ML (machine learning) technology, the nodes and terminals that make up the wireless communication network are becoming more intelligent/advanced. In particular, due to the intelligence of the network/base station, various (network/base station decision) parameter values (e.g., transmission/reception power of each base station, transmission power of each terminal, precoder/beam of base station/terminal, time/frequency resource allocation for each terminal, duplex method of each base station, etc.) may be quickly optimized and derived/applied according to various environmental parameters (e.g., distribution/location of base stations, distribution/location/material of buildings/furniture, etc., location/movement direction/speed of terminals, climate information, etc.) (or changes in relevant environmental parameters).

In this environment, the network may quickly control/adjust interference for each terminal according to environmental parameters that change in real time. For example, the network may control the terminal so that there is very little interference for specific time/frequency/space (e.g., beam, layer) resources and very large interference for other specific time/frequency/space resources.

Here, the network may control transmission and reception to avoid transmission/reception for time/frequency/space resources that cause significant interference to the terminal. In addition, the network may control the terminal to perform communication mainly using time/frequency/space resources with little interference. Alternatively, the network may control a terminal equipped with an interference cancellation reception function to apply an interference cancellation technology (e.g., a technology that estimates and then removes an interference beam/layer) to the corresponding resource.

Examples of operation scenarios that the network/base station may perform based on AI will be described later. However, this is only an example, and the network/base station may derive new operation scenarios based on various types of input data, output data, AI model learning method, and inference method.

As a first scenario, data to be input to the AI model may include at least one of the location/distribution of terminals, requested traffic, and location movement-related information (e.g., information related to the movement of a terminal moving along a certain route, such as movement on a train, or/and information about a fixed terminal with little probability of location change, etc.) on a network/base station basis. In addition, data to be output from the AI model may include at least one of a predicted value of a change in the location/distribution of terminals and/or a predicted value of a change in the requested traffic pattern of the terminals.

The network/base station may determine a short-term/mid-term time/frequency/space resource allocation method and/or interference control/adjustment method for the terminals based on the prediction value and the capability information of each terminal (e.g., information related to whether the terminal has an interference cancellation reception function, etc.).

For example, the network/base station may determine a pattern for the time/frequency/space resource grid to be occupied by each (active) terminal, considering interference avoidance/alignment according to the above predictions and the ability information of each terminal.

As a second scenario, the data to be input to the AI model may be the same as the data to be input to the AI model in the first scenario. Additionally, data to be output from the AI model may include data related to short-term/mid-term time/frequency/space resource allocation methods and/or interference control/adjustment methods for terminals.

For example, the network/base station may determine a pattern for the time/frequency/space resource grid to be occupied by each (activated) terminal in consideration of interference avoidance/alignment, according to data to be output from the AI model.

Transmission method based on multiple transmission occasions (TOs)

The present disclosure describes a method for improving multiple TO-based transmission methods that are variously used in wireless communication systems to improve reliability and secure coverage.

Here, TO means time (e.g., symbol, slot, etc.)/frequency (e.g., subcarrier, RB, etc.)/space (e.g., layer, beam, etc.) resource unit for performing a transmission operation, and a multiple TO-based transmission method refers to a method of transmitting the same information repeatedly or/and dividedly over one or more time/frequency/space resources.

For example, in a basic wireless communication system, a method of repeatedly transmitting one transport block (TB) in a plurality of PDSCH/PUSCH TOs may be performed. Additionally, in a basic wireless communication system, downlink/uplink control information (DCI/UCI), which is control information of the physical layer, can be repeatedly transmitted to several PDCCH/PUCCH TOs.

Hereinafter, for convenience of description of the present disclosure, the method of repeatedly transmitting the same data (e.g., TB/DCI/UCI, etc.) to multiple TOs will be collectively referred to as the 'repeated transmission method'.

Additionally, TB/DCI/UCI, etc. may be transmitted across multiple TOs. That is, by transmitting only part of the TB/DCI/UCI, etc. in each TO, the entire TB/DCI/UCI, etc. can be transmitted across multiple TOs.

Hereinafter, for convenience of description of the present disclosure, the method of transmitting specific data (e.g., TB/DCI/UCI, etc.) across a plurality of TOs will be collectively referred to as the 'fraction transmission method'.

To achieve diversity benefits, when the base station/UE performs a transmission operation in each TO or TO group, different beam information (e.g., TCI, spatial relation), target TRP/cell-related information, power control/allocation information, and/or time/frequency offset-related information, etc. may be applied to each TO or TO group.

As the frequency band in which the wireless communication system operates increases (e.g., 52.6/72 GHz band or higher, etc.) and as propagation loss increases depending on the distance between the base station and the terminal, a method of performing transmission and reception operations in a higher number of TOs may be needed.

Additionally, in order to satisfy service conditions requiring high reliability or to satisfy wider coverage, a method of performing transmission and reception operations in a higher number of TOs may be necessary.

In a basic wireless communication system, in a plurality of TO-based repetitive/fraction transmission methods, the number and location of TOs may be configured/indicated in advance through higher layer signaling, or may be indicated by being included in the corresponding scheduling indicator information (e.g., scheduling DCI). Here, resource allocation information may be transmitted and indicated/configured once initially.

When applying the above-described transmission method to a high number of TO-based transmissions, for AI-based networks/base stations or networks/base stations with advanced performance, there is a limitation that it is difficult to adjust TO while a transmission operation is performed due to dynamically changing/controlled traffic and interference environments. Additionally, an AI-based terminal or a terminal with advanced performance may determine/control the (minimum) number of TOs for successful transmission.

Hereinafter, an improved multiple TO-based transmission method will be described to solve the above-mentioned problem.

FIG. 19 is a diagram for describing a method by which a user equipment (UE) performs communication, according to an embodiment of the present disclosure.

The UE may receive first information related to a plurality of transmission occasions (TOs) including the number of the plurality of TOs from the base station (S1810).

The first information may include information related to a plurality of TOs (e.g., the number of multiple TOs, resource allocation information for multiple TOs, at least one of the (minimum) number of TOs to perform communication between the UE and the base station, etc.).

Additionally, the first information may be configured by the base station through higher layer signaling or may be indicated through scheduling indicator information (e.g., DCI, etc.). As another example, the first information may be predefined between the UE and the base station.

The UE may receive second information from the base station indicating whether to perform communication in at least one specific TO among a plurality of TOs (S1820).

Here, the second information may be obtained based on data output through an artificial intelligence (AI) model previously learned (or trained) by the base station and/or network node.

For example, the AI model may be trained to output communication control information from at least one TO among a plurality of TOs through various types of input data (e.g., at least one of the location/distribution of UEs in the base station, requested traffic, location movement-related information, etc.). The base station may transmit second information for controlling communication in at least one specific TO to the UE through communication control information obtained through the corresponding AI model.

As another example, the AI model may be trained to output second information through various types of input data (e.g., at least one of the location/distribution of UEs in the base station, requested traffic, location movement-related information, etc.). The base station may transmit the second information obtained through the AI model to the UE.

The learning/inference method of the AI model has been described with reference to FIGS. 9 to 18, so redundant description will be omitted.

The UE may transmit an acknowledgment (ACK)/negative-acknowledgement (NACK) to the base station upon receipt of the second information.

The UE may perform communication with the base station in at least one TO among the plurality of TOs based on the second information (S1830).

As an example of the present disclosure, the UE may receive second information included in downlink control information (DCI) or medium access control (MAC)-CE (control element) while communicating with the base station based on the first information. For example, while performing communication with the base station up to the first third TO among a plurality of TOs, the UE may receive second information from the base station through DCI or MAC-CE.

For example, the second information may include information indicating not to perform communication in the at least one specific TO, and the at least one specific TO may mean TOs after the time when the second information is received among the plurality of TOs. At this time, information indicating not to perform communication in the at least one specific TO may mean a hold message.

As another example, the UE may receive information from the base station indicating to resume communication with the base station from the first TO among the TOs after the time when the second information is received. At this time, information indicating to resume communication with the base station may mean a resume message.

Another example, the second information may include information indicating not to perform communication in the at least one specific TO, and the at least one specific TO may mean TOs from the TO to the second TO after the time when the second information is received among the plurality of TOs. At this time, information indicating not to perform communication in the at least one specific TO may mean a skip message.

In addition, based on the total sum of the number of TOs in which communication with the base station has been performed among a plurality of TOs and the number of TOs that have elapsed based on the second information becoming the first threshold, the UE may stop communicating with the base station.

Another example of the present disclosure, the second information may indicate that communication will be performed in at least one specific TO among a plurality of TOs and that communication will not be performed in TOs other than the at least one specific TO among a plurality of TOs. That is, the second information may include a pattern message regarding whether or not a plurality of consecutive TOs are actually transmitted.

Here, if the number of the at least one specific TO is less than the number of TOs to perform communication with the base station (the number of TOs that will perform communication with the base station), the UE may receive additional second information from the base station. At this time, content that is the same as the content indicated in the original second information (e.g., symbol position information within a slot, frequency position information, etc.) may be omitted from the additional second information. The UE may perform communication with the base station based on the additional second information.

Here, the number of TOs to perform communication with the base station may be predefined or configured by the base station. The number of TOs to perform communication with the base station may be configured based on the first information, but is not limited to this and may be configured through separate higher layer signaling.

And, based on the total sum of the number of at least one specific TO and the number of TOs that have performed communication according to the additional second information becoming the number of TOs to perform communication with the base station, the UE may stop communication with the base station.

And, based on the number of the at least one specific TO being less than the number of TOs to perform communication with the base station, and additional second information being not received from the base station for a preconfigured time period, the UE may stop communicating with the base station.

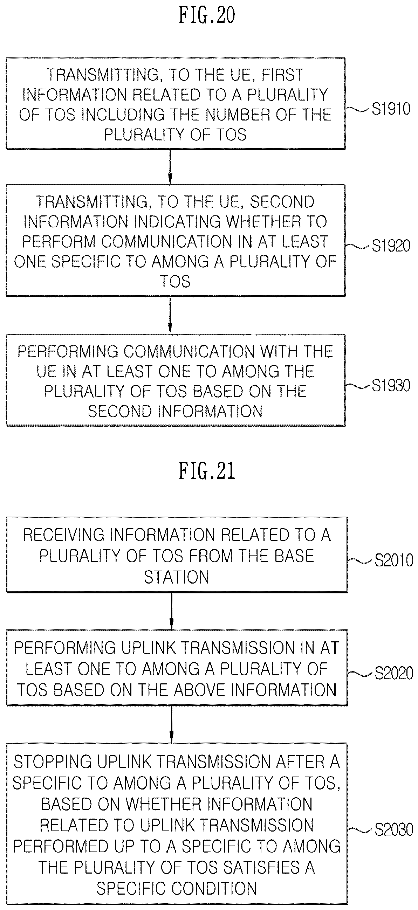

FIG. 20 is a diagram for describing a method of performing communication by a base station, according to an embodiment of the present disclosure.

The base station may transmit first information related to a plurality of TOs, including the number of the plurality of TOs, to the UE (S1910).

The base station may transmit second information indicating whether to perform communication in at least one specific TO among a plurality of TOs to the UE (S1920).

The base station may perform communication with the UE in at least one TO among the plurality of TOs based on the second information (S1930).

Regarding the first information, the second information, and the method of performing communication based thereon, matters described with reference to steps S1810 to S1830 of FIG. 19 and specific examples described later may be applied to S1910 to S1930.

FIG. 21 is a diagram for describing a method by which a terminal performs uplink transmission, according to an embodiment of the present disclosure.

The UE may receive information related to a plurality of TOs from the base station (S2010).

Information related to the plurality of TOs may include at least one of the number of the plurality of TOs, resource allocation information for the plurality of TOs, and the number of TOs to perform communication between the UE and the base station.

The UE may perform uplink transmission in at least one TO among a plurality of TOs based on the above information (S2020).

The UE may stop uplink transmission after a specific TO among a plurality of TOs, based on whether information related to uplink transmission performed up to a specific TO among the plurality of TOs satisfies a specific condition (S2030).

Here, information related to uplink transmission performed up to a specific TO may include the (accumulated) quality value (or, value measured/predicted from quality (change)) of the downlink reference signal (e.g., DL RS for PUCCH/SRS/PUCCH/PRACH (e.g., spatial relation RS, path loss RS, TCI, etc.)) for uplink transmission performed up to a specific TO. That is, information related to uplink transmission performed up to a specific TO may include the quality value (or, value measured/predicted from quality (change)) of the downlink reference signal for the uplink transmission accumulated as it is performed up to a specific TO among a plurality of TOs.

And, the specific condition may include a condition based on whether the (accumulated) quality value exceeds a second threshold.

Additionally, the UE may transmit information indicating the interruption (or stop) of uplink transmission to the base station at a specific TO or through a separate uplink resource, based on the satisfaction of a specific condition. For example, the UE may transmit information indicating the interruption (or stop) of uplink transmission in a specific TO to the base station through a separate information field or by utilizing a specific (reserved) code point in an existing field.

In another embodiment of the present disclosure, information related to uplink transmission performed up to a specific TO may be obtained based on data output through a pre-learned (or trained) artificial intelligence (AI) model. That is, the UE may determine that sufficient uplink transmission has been performed in one or more TOs through the corresponding AI model.

For example, the AI model may be learned to output the quality (change) value of downlink RS related to uplink transmission performed in a specific TO through various types of input data (e.g., data related to downlink reference signals for uplink transmission, etc.). The UE may determine whether a specific condition is satisfied by determining whether the quality (change) value of the corresponding downlink RS output through the AI model exceeds the second threshold. The learning/inference method of the AI model has been described with reference to FIGS. 9 to 18, so redundant description will be omitted.

Hereinafter, a plurality of TO-based transmission embodiments applicable to the present disclosure will be described in detail.

Embodiment 1

In multiple TO-based transmission methods, the base station may indicate/configure the total TO number value (N) to the UE in advance (through higher layer signaling) or may indicate/configure it through corresponding scheduling indicator information (e.g., scheduling DCI). And, while the TO-based transmission operation is performed, the base station may indicate/configure a hold/resume/skip message to the UE (via DCI).

And, the hold message refers to a message that indicates/configures to stop transmission/reception from a certain point after receiving the message. A resume message refers to a message that indicates/configures to resume transmission/reception from a specific point in time after receiving the message (if reception/transmission is interrupted (stopped) by a hold message).

A skip message refers to a message including indications to stop sending/receiving at the TO a predefined number of times or/and a configured number of times from a specific point in time after receiving the message. At this time, the number of TOs to stop transmission/reception may be a value that applies a predefined value (e.g., 1), is configured through a separate (e.g., upper layer signaling) message, or is indicated with a skip message.

ACK/NACK information regarding whether the UE has properly received the hold/resume/skip message may be configured to be returned (to the base station). That is, the UE may transmit ACK/NACK information about whether the hold/resume/skip message was normally received to the base station.

If a separate hold/resume/skip message is not received from the base station, the UE may perform transmission/reception in the (continuous) TO according to a preconfigured/indicated method.

Additionally, the UE may stop receiving/transmitting the TO after receiving/transmitting the preconfigured/indicated N number of times or after a 'specific time/number of times'. Here, the 'specific time/number of times' may be a predefined specific value (depending on the value of N) or a value configured/indicated by the base station. However, this is only an example, and information related to 'specific time/number of times' may be omitted, and the operation described in Embodiment 1 may be defined.

For example, assume that the base station indicate/configures the total number of TOs to 32 for the UE (i.e., N=32), schedules DL/UL in the corresponding TOs, and instructs/sets 64 TOs as the value for the 'specific number of times'. From the initial TO point (indicated through scheduling DCI) (if a separate hold/skip message is not received before then), the UE may start performing DL reception or UL transmission. If reception/transmission corresponding to 20 TO is interrupted by a hold/resume/skip message while performing DL reception or UL transmission, the UE may perform reception/transmission until 52 (32+20) TO. In other words, the UE may stop the reception/transmission operation after completing the reception/transmission operation in 32 TOs until the 52 TO point (less than 64 TO).

Embodiment 2

In multiple TO-based transmission methods, the base station may dynamically indicate a pattern message regarding whether to actually transmit M consecutive TOs to the UE through corresponding scheduling indicator information and/or separate indicator information (e.g., MAC-CE and/or DCI).

Here, the M value may be a predefined value (depending on subcarrier spacing (SCS) or slot format, etc.) or a value configured/indicated by the base station.

And, the (scheduling) indicator information may be transmitted more than once (e.g., for each M TO). And, if subsequent indicator(s) are transmitted after the first indicator information is transmitted, in the subsequent indicator information, information (e.g., symbol position information within a slot, frequency position information) that is the same as (or maintained by) the content indicated in the initial indicator (i.e., existing indicator information) may be omitted.

In performing the operation according to Embodiment 2, the base station may configure/indicate the UE in advance (through higher layer signaling) on the (minimum) number (P) of total TOs to be actually transmitted/received, or may be configured/indicated through initial scheduling indicator information (e.g., scheduling DCI). Alternatively, the P value may be determined to be a specific value (by other variables such as M value, SCS, slot format, etc.).

As described above, when P is indicated/configured/determined, the UE may expect to receive additional indicator information from the base station (within a certain time) until the total number of TOs actually transmitted/received reaches P times. Alternatively, the UE may expect that no additional indicator information will be transmitted from the base station after the total number of TOs actually transmitted/received reaches P times.

As another example, if the P value is indicated/configured/determined by the actual transmission TO value rather than the minimum number value of total TO to be actually transmitted, the UE may perform transmission/reception at P number of TOs (even if the value indicated in the pattern message (e.g., the number of TOs indicating transmission/reception, etc.) exceeds P), and may then stop transmitting/receiving operations.

And, even if transmission/reception is not completed at P number TO (if the base station has already successfully received or determines that transmission is no longer necessary), the base station may stop transmission through a separate indicator to the UE, or may no longer send related indicators. At this time, if there is no subsequent indicator information within a certain period of time, the UE may interpret that the repeated/segmented transmission has been stopped.

The pattern for M consecutive TOs may be a pattern defined as a relative continuous time/frequency/space unit index based on the scheduling resource or resource information included in the scheduling information, or may be a pattern defined as an absolute continuous time/frequency/space unit index (e.g., absolute slot index) on the system frame structure.

Here, the continuous resource may be a continuous resource that satisfies specific conditions. For example, from the perspective of PDSCH transmission in a TDD structure, consecutive slots may be slots in which a DL portion in which the corresponding PDSCH may be transmitted exists.

For example, in the case of M=16 and slot-based repetitive transmission, it is assumed that the UE is indicated to receive a pattern message (e.g., [1011001010110011]) through DCI. At this time, among the pattern messages indicated by DCI, 1 may indicate transmission/reception in the corresponding slot, and 0 may indicate transmission/reception in the corresponding slot. That is, in the above example, the total number of TOs that actually performed transmission (i.e., the total number of 1s in the pattern message indicated by the DCI) may be 9.

At this time, it is assumed that the P value is defined as the minimum number of total TOs to be actually transmitted, and that P is indicated/configured/decided to be 12. In this case, if another pattern message (e.g., [1000001010110011]) is indicated through the subsequent DCI, the UE may transmit/receive in a total of 16 (9 + 7) TOs until the last TO (i.e., the 32nd TO) of the different pattern message.

As another example, assume that the P value is defined as the number of actual transmission TOs (i.e., the total number of TOs for which actual transmission will be performed), and P is indicated/configured/determined to be 12. In this case, if another pattern message (e.g., [1000001010110011]) is indicated through the subsequent DCI, the UE may perform a total of 12 (9 times + 3 times) transmission/reception at the 25th TO and stop transmission/reception thereafter.

Embodiment 3

In the multiple TO-based uplink transmission method, when the base station allocates resources for N TOs to the UE, the UE may stop transmission after performing transmission only for some M (M is a value equal to or less than N) TOs among the corresponding TOs (when specific conditions are satisfied).

Here, the specific condition may be a condition related to a case where a (expected) performance metric related to reliability is satisfied above a specific quality threshold even if only M times are transmitted (i.e., transmitted from M TOs).

The performance metric may be a value measured/predicted from the quality (change) of downlink RS (e.g., DL RS for PUCCH/SRS/PUCCH/PRACH (e.g., spatial relation RS, pathloss RS, TCI)) related to the uplink transmission.

Additionally, the threshold may be a predefined value or a value configured/indicated by the base station.

Additionally, the UE may transmit a message to the base station from the (last) Mth TO indicating that transmission will be stopped when a specific condition is satisfied. For example, the UE may transmit a message to the base station to stop transmission in the M-th TO through a separate information field or by using a specific (reserved) codepoint in an existing field. As another example, the UE may transmit a message to the base station to stop transmission through a separate UL resource in the M-th TO. Because of this, the blind decoding burden of the base station may be reduced and UL resources may be recycled.

The method according to Embodiment 3 may be applied together with the method according to Examples 1 and 2, respectively.

For example, when Embodiment 1 and Embodiment 3 are applied together, the base station may control the UE's transmission by sending a hold/resume/skip message to the UE, and the UE may stop transmission if it is determined that sufficient TO has been transmitted (according to AI-based prediction information).

As another example, when Embodiment 2 and Embodiment 3 are applied together, the base station may control the transmission of the UE by transmitting a dynamic TO pattern message to the UE, and the UE may stop transmission when it is determined that sufficient TO has been transmitted (according to AI-based prediction information).

In other words, Embodiment 3 may be used as one of the methods/conditions for stopping transmission in Embodiment 1/ Embodiment 2.

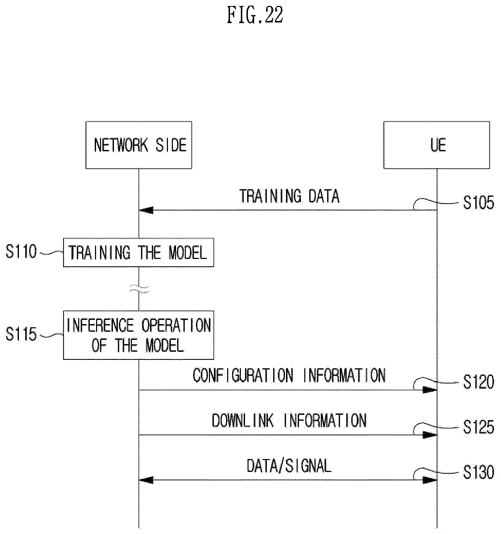

FIG. 22 is a diagram for describing the signaling procedure of the network side and the terminal according to the present disclosure.

FIG. 22 shows an example of signaling between a network side and a terminal (UE) in a (M-TRP) situation to which the Embodiments (e.g., a combination of one or more of Embodiment 1, Embodiment 2, Embodiment 3, or detailed Embodiments thereof) of the present disclosure described above may be applied.

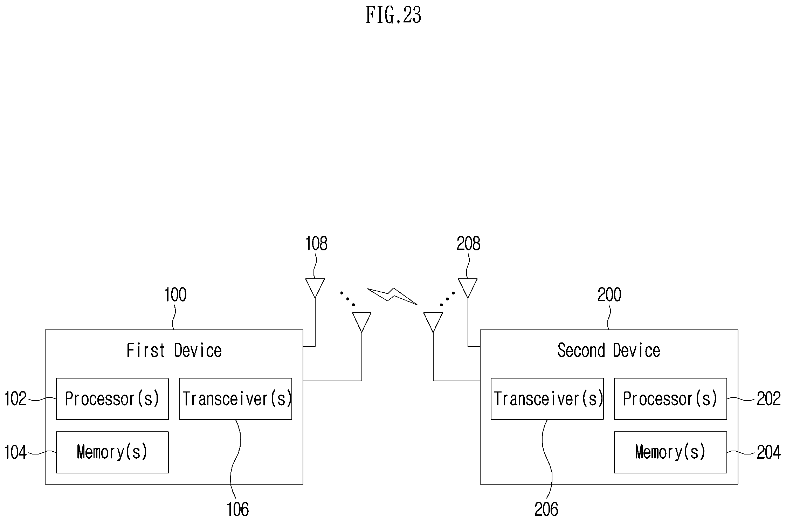

Here, the UE/network side is an example and may be replaced with various devices as described with reference to FIG. 23. FIG. 22 is for convenience of explanation and does not limit the scope of the present disclosure. Additionally, some step(s) shown in FIG. 22 may be omitted depending on the situation and/or settings. Additionally, in the operation of the network side/terminal in FIG. 22, the above-described uplink transmission/reception operation, M-TRP-related operation, etc. may be referenced or used.

In the following description, the network side may be one base station including multiple TRPs, or may be one cell including multiple TRPs. Alternatively, the network side may include a plurality of remote radio heads (RRH)/remote radio units (RRU). For example, ideal/non-ideal backhaul may be configured between TRP 1 and TRP 2, which constitute the network side. In addition, the following description is based on multiple TRPs, but it may be equally extended and applied to transmission through multiple panels/cells, and may also be extended and applied to transmission through multiple RRHs/RRUs, etc.

In addition, although described based on "TRP" in the following description, as described above, "TRP" may be replaced with expressions of a panel, an antenna array, a cell (e.g., a macro cell/small cell/pico cell, etc.), a TP (transmission point), a base station (e.g., gNB, etc.), and the like. As described above, the TRP may be classified according to information (e.g., CORESET index, ID) on the CORESET group (or CORESET pool). As an example, when one UE is configured to perform transmission/reception with a plurality of TRPs (or cells), this may mean that a plurality of CORESET groups (or CORESET pools) are configured for one UE. The configuration of such a CORESET group (or CORESET pool) may be performed through higher layer signaling (e.g., RRC signaling, etc.).

In addition, the base station may mean a generic term for an object that transmits and receives data with the UE. For example, the base station may be a concept including one or more TPs (Transmission Points), one or more TRPs (Transmission and Reception Points), and the like. In addition, the TP and/or TRP may include a panel of a base station, a transmission and reception unit, and the like.

The UE may provide training data (or learning data) (location/distribution of UEs, requested traffic, location movement-related information, etc. based on the network side) to train (or learn) an AI model to the network (S105). However, this is only an example, and as described with reference to FIGS. 9 to 18, training data may be provided to the network from various nodes (e.g., RAN 1 node/RAN node 2).

The network side may train an AI model based on training data provided from the UE or/and the RAN 1 node/RAN 2 node (S110).

For example, the AI model may be trained to output data necessary to obtain second information indicating whether to perform communication in at least one specific TO among a plurality of TOs. As another example, an AI model may be trained to output second information. As another example, an AI model may be trained to output information related to a plurality of TOs optimized for the UE.

The configuration and various operations of the AI model have been described with reference to FIGS. 9 to 18, so redundant description will be omitted.

Hereinafter, configuration information or/and control information or/and data/signal transmitted from the network side to the UE may be output through the inference operation (S115) of the AI model, or may be obtained based on data output through the inference operation (S115). That is, the operation of the network described later may mean the operation according to the actor described with reference to FIG. 9 or/and the operation step described with reference to FIGS. 11 and 12.

However, this is only an example, and the network side may obtain the relevant setting information or/and control information or/and data/signal and transmit it to the UE without using the AI model.

And, in FIG. 22, The step (S115) in which the AI model performs the inference operation is shown as being performed before the step of outputting each configuration information or/and control information or/and data/signal, but this is only an example. The AI model may dynamically perform inference operations when each setting information or/and control information or/and control data is needed.

The UE may receive configuration information from the network side in a method according to the above-described Embodiments (e.g., Embodiment 1, Embodiment 2, Embodiment 3, or one or more combinations of detailed embodiments thereof) (S120). That is, the network side may transmit configuration information to the UE.

The configuration information may include system information and/or scheduling information and/or beam management (BM)-related configurations (e.g., DL BM-related CSI-ResourceConfig IE/NZP CSI-RS resource set IE, etc.). For example, the configuration information may include information related to network side configuration (i.e., TRP configuration), resource information related to transmission and reception based on multiple TRPs (resource allocation), etc. For example, the configuration information may include CORESET-related configurations/SS (search space set)-related configurations, etc. The configuration information may be transmitted to a higher layer (e.g., RRC or MAC CE). Additionally, if the configuration information is defined or configured in advance, the corresponding step may be omitted.

For example, the configuration information may include parameters for applying the Embodiment (e.g., Embodiment 1, Embodiment 2, Embodiment 3, or one or more combinations of detailed Embodiments thereof). For example, the configuration information may include configuration information related to repeated transmission (e.g., whether to perform repeated transmission/number of repeated transmissions/repetition type/resource allocation information for repeated transmission (start symbol and length, etc.)). Additionally, the configuration information may include a value P for the (minimum) number of total TOs to be actually transmitted based on the above embodiment (e.g., a combination of one or more of Embodiment 1, Embodiment 2, Embodiment 3, or detailed Embodiments thereof).

For example, the operation of the UE (100 or 200 in FIG. 23) in step S120 described above to receive the configuration information from the network side (200 or 100 in FIG. 23) may be implemented by the device in FIG. 23, which will be described below. For example, referring to FIG. 23, one or more processors 102 may control one or more transceivers 106 and/or one or more memories 104 to receive the configuration information, and one or more transceivers 106 may receive the configuration information from a network side.

The UE may receive control information from the network side (S125). That is, the network side may transmit control information to the UE.

For example, the control information may be DCI or MAC CE, and may be received through a control channel (e.g., PDCCH) and a data channel (e.g., PDSCH), respectively. In the case of single DCI-based cooperative transmission, the control information may be transmitted through/using a representative TRP among the TRPs constituting the network side. In the case of multiple DCI-based cooperative transmission, the control information may be transmitted through/using each TRP that constitutes the network side.

For example, the control information may be received based on the above-described embodiment (e.g., Embodiment 1, Embodiment 2, Embodiment 3, or a combination of one or more of the detailed Embodiments thereof). For example, the control information may include hold information/resume information/skip information for repeated transmission based on the above-described embodiment (e.g., Embodiment 1, Embodiment 2, Embodiment 3, or a combination of one or more of the detailed Embodiments thereof). In this case, ACK(/NACK) information for the control information may be returned.

Additionally, the control information may include pattern information on whether M consecutive TOs for repeated transmission are actually transmitted based on the above-described embodiment (e.g., Embodiment 1, Embodiment 2, Embodiment 3, or a combination of one or more of the detailed Embodiments thereof). Here, the control information may be transmitted multiple times (e.g., per M TOs), and information that follows the initial information but maintains the content indicated by the existing control information (e.g., symbol location information within a slot, frequency location information) may be omitted. Additionally, the (minimum) number value P of total TOs to be actually transmitted may be indicated by control information.

For example, the operation of the UE (100 or 200 in FIG. 23) receiving control information from the network side (200 or 100 in FIG. 23) in step S125 described above may be performed based on the above-described embodiments (e.g., Embodiment 1, Embodiment 2, Embodiment 3, or a combination of one or more of the detailed Embodiments thereof). For example, referring to FIG. 23, one or more processors 102 may control one or more transceivers 106 and/or one or more memories 104 to receive the control information, and one or more transceivers 106 may receive the control information from a network side.

The UE may receive data/signal from the network (S130). Similarly, the network side (or BS) may transmit data/signals to the UE.

For example, the data/signal may be transmitted and received based on information configured/indicated in steps S120/S125 (e.g., configuration information, control information, etc.).

For example, based on the above-described embodiment (e.g., Embodiment 1, Embodiment 2, Embodiment 3, or a combination of one or more of the detailed Embodiments thereof), the UE may perform transmission only for some M TOs (M≤N) and then stop transmission depending on whether a specific condition is satisfied among the N resource-allocated TOs.

Here, the 'specific condition' may correspond to a condition in which the value measured/predicted from the quality (change) of the downlink RS (e.g., DL RS (e.g., spatial relation RS, pathloss RS, TCI) for PUCCH/SRS/PUCCH/PRACH) related to the uplink transmission is satisfied above a certain threshold.

In addition, when transmission is performed only for some M TOs (M≤N), the UE may transmit a message to the network to stop transmission at the last M TO or through a separate UL resource.

For example, the operation of transmitting and receiving the data/signal between the UE and the network in step S130 described above may be implemented by the device of FIG. 23, which will be described below. For example, referring to FIG. 22, one or more processors 102 may control one or more transceivers 106 and/or one or more memories 104 to transmit and receive the data/signals, and one or more transceivers 106 may transmit and receive the data/signals to and from a network.

As previously mentioned, Embodiments (e.g., a combination of one or more of Embodiment 1, Embodiment 2, Embodiment 3, or detailed Embodiments thereof) related to the above-described network side/UE signaling and operations may be implemented by devices to be described below. For example, the network side (e.g., TRP 1 / TRP 2) may correspond to the first device, the UE may correspond to the second device, and vice versa may be considered in some cases.

For example, Embodiments (e.g., a combination of one or more of Embodiment 1, Embodiment 2, Embodiment 3, or detailed Embodiments thereof) related to network side/UE signaling and operations described above may be processed by one or more processors of FIG. 23 (e.g., 102, 202), and the above-described network side/UE signaling and operations e.g., a combination of one or more of Embodiment 1, Embodiment 2, Embodiment 3, or detailed Embodiments thereof) may be stored in memory (e.g., one or more memories (e.g., 104, 204) of FIG. 23) in the form of instructions/programs (e.g., instructions, executable code) for driving at least one processor (e.g., 102, 202) of FIG. 23.


General Device to which the Present Disclosure may be applied


Fig. 23 illustrates a block diagram of a wireless communication apparatus according to an embodiment of the present disclosure.

Referring to FIG. 23, the first device 100 and the second device 200 may transmit/receive radio signals through various radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat S1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

**1.** A method for a user equipment (UE) to perform communication in a wireless communication system, the method comprising:

receiving, from a base station, first information related to a plurality of transmission occasions (TOs) including a number of the plurality of TOs;
receiving, from the base station, second information indicating whether to perform communication in at least one specific TO among the plurality of TOs; and
performing communication with the base station in at least one TO among the plurality of TOs based on the second information.

2. The method of claim 1, wherein:
the second information is included in downlink control information (DCI) or MAC (medium access control)-CE (control element) and received from the base station while performing communication with the base station based on the first information.

3. The method of claim 1, wherein:

the second information includes information indicating not to perform communication in the at least one specific TO, and
the at least one specific TO is TOs after the second information is received among the plurality of TOs.

4. The method of claim 3, wherein:
information indicating to resume communication with the base station is received from the base station from a first TO among the TOs after the second information is received.

5. The method of claim 1, wherein:

the second information includes information indicating not to perform communication in the at least one specific TO, and
the at least one specific TO is from a TO after the second information is received to a second TO among the plurality of TOs.

6. The method of claim 1, wherein:
based on a total sum of a number of TOs in which communication with the base station among the plurality of TOs has been performed and a number of TOs that have elapsed based on the second information becoming a first threshold, communication with the base station is stopped.

7. The method of claim 1, wherein:
the second information indicates that communication is performed in the at least one specific TO and communication is not performed in TOs other than the at least one specific TO among the plurality of TOs.

8. The method of claim 7, wherein:

if a number of the at least one specific TO is less than a number of TOs to communicate with the base station, additional second information is received from the base station,
communication with the base station is performed based on the additional second information, and
the number of TOs to perform communication with the base station is predefined or configured by the base station.

9. The method of claim 8, wherein:
based on a total sum of the number of the at least one specific TO and a number of TOs in which communication has been performed according to the additional second information becoming the number of TOs to perform communication with the base station, communication with the base station is stopped.

10. The method of claim 7, wherein:
based on the number of the at least one specific TO being less than the number of TOs to perform communication with the base station, and additional second information being not received from the base station for a preconfigured time period, communication with the base station is stopped.

11. The method of claim 1, wherein:

ACK(acknowledgement)/NACK (negative-acknowledgement) for reception of the second information is transmitted to the base station.

12. The method of claim 1, wherein:
   the second information is based on data output through an artificial intelligence (AI) model previously learned by the base station or network node.

13. A method for a user equipment (UE) to perform uplink transmission in a wireless communication system, the method comprising:

   receiving information related to a plurality of transmission occasions (TOs) from a base station;
   performing uplink transmission in at least one TO among the plurality of TOs based on the information; and
   based on information related to uplink transmission performed up to a specific TO among the plurality of TOs satisfying a specific condition, stopping the uplink transmission after the specific TO among the plurality of TOs.

14. The method of claim 13, wherein:

   information related to uplink transmission performed up to the specific TO includes an cumulative quality value of a downlink reference signal (RS) for the uplink transmission performed up to the specific TO, and
   the specific condition includes a condition based on whether the cumulative quality value exceeds a second threshold.

15. The method of claim 14, wherein:
   based on the specific condition being satisfied, information indicating a stop of the uplink transmission is transmitted to the base station in the specific TO or through a separate uplink resource.

16. The method of claim 14, wherein:
   the information related to uplink transmission performed up to the specific TO is based on data output through a pre-trained AI model.

17. A user equipment (UE) performing communication in a wireless communication system, the UE comprising:

   at least one transceiver; and
   at least one processor connected to the at least one transceiver,
   wherein the at least one processor is configured to:

   receive, from a base station through the at least one transceiver, first information related to a plurality of transmission occasions (TOs) including a number of the plurality of TOs;
   receive, from the base station through the at least one transceiver, second information indicating whether to perform communication in at least one specific TO among the plurality of TOs; and
   perform communication with the base station in the at least one TO among the plurality of TOs based on the second information.

18. A method performed by a base station in a wireless communication system, the method includes:

   transmitting, to a user equipment (UE), first information related to a plurality of transmission occasions (TOs) including a number of the plurality of TOs;
   transmitting, to the UE, second information indicating whether to perform communication in at least one specific TO among the plurality of TOs; and
   performing communication with the UE in the at least one TO among the plurality of TOs based on the second information.

19. A base station performing communication in a wireless communication system, the base station comprising:

   at least one transceiver; and
   at least one processor connected to the at least one transceiver,
   wherein the at least one processor is configured to:

transmit, to a user equipment (UE) through the at least one transceiver, first information related to a plurality of transmission occasions (TOs) including a number of the plurality of TOs;

transmit, to the UE through the at least one transceiver, second information indicating whether to perform communication in at least one specific TO among the plurality of TOs; and

perform communication with the UE in the at least one TO among the plurality of TOs based on the second information.

20. A processing device configured to control a user equipment (UE) to perform communication in a wireless communication system, the processing device comprising:

at least one processor; and

at least one computer memory operatively coupled to the at least one processor and storing instructions for performing operations upon being executed by the at least one processor,

wherein the operations comprise:

receiving, from a base station, first information related to a plurality of transmission occasions (TOs) including a number of the plurality of TOs;

receiving, from the base station, second information indicating whether to perform communication in at least one specific TO among the plurality of TOs; and

performing communication with the base station in the at least one TO among the plurality of TOs based on the second information.

21. At least one non-transitory computer readable medium storing at least one instruction, wherein:

the at least one instruction executed by at least one processor controls a device which performs communication in a wireless communication system to perform:

receiving, from a base station, first information related to a plurality of transmission occasions (TOs) including a number of the plurality of TOs;

receiving, from the base station, second information indicating whether to perform communication in at least one specific TO among the plurality of TOs; and

performing communication with the base station in the at least one TO among the plurality of TOs based on the second information.

FIG.1

## FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends
on subcarrier
spacing

Mini-Slot
(URLLC)

Mini-Slot={2,4,7} Symbols

FIG.3

One Subframe

$14 \cdot 2^\mu$ OFDM Symbol

$k = N_{RB}^\mu N_{SC}^{RB} - 1$

$N_{RB}^\mu N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^\mu - 1$

FIG.4

# FIG.5

Resource grid

A carrier
(up to 3300 subcarriers,i,e.,275 RBs)

A BWP

1 RB=12 subcarrier

1 RE

1 subcarrier

1 Symbol

l=0 .....

k=0

FIG.6

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S601        S602        S603        S604        S605        S606        S607        S608

· DL/UL ACK/NACK
· UE CQI/PMI RI REPORT
  USING PUSCH AND PUCCH

FIG.7

UE                                            Base station

Downlink scheduling ⌐—S1401

DCI for downlink scheduling (PDCCH) ⌐—S1402

Downlink data (PDSCH) ⌐—S1403

FIG.8

UE                                            Base station

Uplink scheduling ⌐—S1501

DCI for uplink scheduling (PDCCH) ⌐—S1502

Uplink data (PUSCH) ⌐—S1503

FIG.9

Artificial Intelligence

Machine learning

Deep Learning

FIG.10

Input layer    Hidden layer    Output layer

FIG.11

## FIG.12

Input image
36 × 36

4 feature maps

28 × 28

14 × 14

Convolution
(kernel:9 × 9 × 1)

Max pooling

## FIG.13

Encoder          Decoder

Loss function: $\underset{W,V}{\arg\min} \|x - g(f(x))\|^2$ ,
where h = f(x) = Wx, x' = g(h) = Vh

## FIG.14

## FIG.15

## FIG.16

| UE | RAN node 1 | RAN node 2 | Network node |

1. Training data

1. Training data

2. Model training

3. Model deployment/update

4. Inference data

4. Inference data

5. Model inference

6. Model performance feedback

7. Action

8. Feedback

8. Feedback

## FIG.17

| UE | RAN node 1 | RAN node 2 |

1. Training data

1. Training data

2. Model training

3. Inference data

3. Inference data

4. Model inference

5. Action

6. Feedback

## FIG.18

UE          RAN node

1. Training data →

2. Model training

← 3. Model deployment/update

← 4. Inference data

5. Model inference

6. Model performance feedback →

7. Action

8. Feedback →

## FIG.19

RECEIVING, FROM THE BASE STATION, FIRST INFORMATION RELATED TO A PLURALITY OF TOS INCLUDING THE NUMBER OF THE PLURALITY OF TOS    ~S1810

RECEIVING SECOND INFORMATION, FROM THE BASE STATION, INDICATING WHETHER TO PERFORM COMMUNICATION IN AT LEAST ONE SPECIFIC TO AMONG A PLURALITY OF TOS    ~S1820

PERFORMING COMMUNICATION WITH THE BASE STATION IN AT LEAST ONE TO AMONG THE PLURALITY OF TOS BASED ON THE SECOND INFORMATION    ~S1830

## FIG.20

TRANSMITTING, TO THE UE, FIRST INFORMATION RELATED TO A PLURALITY OF TOS INCLUDING THE NUMBER OF THE PLURALITY OF TOS ~S1910

TRANSMITTING, TO THE UE, SECOND INFORMATION INDICATING WHETHER TO PERFORM COMMUNICATION IN AT LEAST ONE SPECIFIC TO AMONG A PLURALITY OF TOS ~S1920

PERFORMING COMMUNICATION WITH THE UE IN AT LEAST ONE TO AMONG THE PLURALITY OF TOS BASED ON THE SECOND INFORMATION ~S1930

## FIG.21

RECEIVING INFORMATION RELATED TO A PLURALITY OF TOS FROM THE BASE STATION ~S2010

PERFORMING UPLINK TRANSMISSION IN AT LEAST ONE TO AMONG A PLURALITY OF TOS BASED ON THE ABOVE INFORMATION ~S2020

STOPPING UPLINK TRANSMISSION AFTER A SPECIFIC TO AMONG A PLURALITY OF TOS, BASED ON WHETHER INFORMATION RELATED TO UPLINK TRANSMISSION PERFORMED UP TO A SPECIFIC TO AMONG THE PLURALITY OF TOS SATISFIES A SPECIFIC CONDITION ~S2030

FIG.22

FIG.23

## INTERNATIONAL SEARCH REPORT

| International application No. |
| --- |
| **PCT/KR2022/006557** |

| A. | CLASSIFICATION OF SUBJECT MATTER |
| --- | --- |
| | **H04L 1/08**(2006.01)i; **H04L 5/00**(2006.01)i; **H04W 72/04**(2009.01)i; **H04W 72/12**(2009.01)i; **H04W 72/14**(2009.01)i |

According to International Patent Classification (IPC) or to both national classification and IPC

| B. | FIELDS SEARCHED |
| --- | --- |

Minimum documentation searched (classification system followed by classification symbols)

H04L 1/08(2006.01); H04W 52/42(2009.01); H04W 56/00(2009.01); H04W 74/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전송 기회(transmission occasion, TO), 개수(number), DCI, 재개(resume), 인공 지능(artificial intelligence, AI)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X <br> A | ERICSSON. Finalizing issues for mTRP. R1-1912656, 3GPP TSG-RAN WG1 #99. Reno, USA. 08 November 2019. <br> See pages 1-15. | 1-3,5,11,17-21 <br> 4,6-10,12-16 |
| A | QUALCOMM INCORPORATED. TB Processing over multi-slot PUSCH. R1-2103179, 3GPP TSG-RAN WG1 #104bis-e. 07 April 2021. <br> See pages 1-8. | 1-21 |
| A | US 2021-0051707 A1 (COMCAST CABLE COMMUNICATIONS, LLC) 18 February 2021 (2021-02-18) <br> See paragraphs [0273]-[0275] and figure 23. | 1-21 |
| A | WO 2020-009510 A1 (LG ELECTRONICS INC.) 09 January 2020 (2020-01-09) <br> See page 22, line 14 - page 89, line 13; and figures 3 and 15. | 1-21 |
| A | VIVO. On remaining issues on M-TRP. R1-2003397, 3GPP TSG-RAN WG1 #101-e. 16 May 2020. <br> See pages 1-15. | 1-21 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **12 August 2022** | **12 August 2022** |

| Name and mailing address of the ISA/KR | Authorized officer |
| --- | --- |
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

| INTERNATIONAL SEARCH REPORT Information on patent family members | | International application No. PCT/KR2022/006557 |
|---|---|---|

| Patent document cited in search report | | | Publication date (day/month/year) | Patent family member(s) | | | Publication date (day/month/year) |
|---|---|---|---|---|---|---|---|
| US | 2021-0051707 | A1 | 18 February 2021 | CA | 3090159 | A1 | 16 February 2021 |
| | | | | EP | 3780871 | A1 | 17 February 2021 |
| WO | 2020-009510 | A1 | 09 January 2020 | US | 2021-0176780 | A1 | 10 June 2021 |
| | | | | US | 2021-0176797 | A1 | 10 June 2021 |
| | | | | US | 2021-0282180 | A1 | 09 September 2021 |
| | | | | WO | 2020-009509 | A1 | 09 January 2020 |
| | | | | WO | 2020-009511 | A1 | 09 January 2020 |

Form PCT/ISA/210 (patent family annex) (July 2019)